# EUROPEAN PATENT SPECIFICATION

(11) **EP 0 446 194 B1**
(45) Date of publication and mention of the grant of the patent: **17.05.1995**
(21) Application number: 91850057.0
(22) Date of filing: 06.03.1991
(51) Int. Cl.: H04B 7/26, H04L 9/00, H04K 1/00

(54) **Continous cipher synchronization for cellular communication system**
Kontinuierliche Synchronisation von Chiffriervorrichtungen in einem mobilen Kommunikationssystem
Synchronisation continue des dispositifs de chiffrage dans un système cellulaire de communication

(30) Priority: 07.03.1990 SE 9000801; 20.07.1990 US 556102
(43) Date of publication of application: 11.09.1991
(73) Proprietor: TELEFONAKTIEBOLAGET L M ERICSSON, 126 25 Stockholm (SE)
(72) Inventor: Dent, Paul Wilkinson, Cary, North Carolina 27513 (US)
(74) Representative: Lövgren, Tage

(56) References cited:
- EP-A- 0 073 323
- EP-A- 0 273 289
- WO-A-84/00456
- US-A- 4 549 308
- US-A- 4 555 805
- US-A- 4 636 854
- US-A- 4 757 536

## Description

### Field of the Invention

The present invention relates to digital cellular communication systems, and more particularly, to a method and apparatus for the encryption of data communications within such a system.

### History of the Prior Art

Cellular radio communications is, perhaps, the fastest growing field in the world-wide telecommunications industry. Although cellular radio communication systems comprise only a small fraction of the telecommunications systems presently in operation, it is widely believed that this fraction will steadily increase and will represent a major portion of the entire telecommunications market in the not too distant future. This belief is grounded in the inherent limitations of conventional telephone communications networks which rely primarily on wire technology to connect subscribers within the network. A standard household or office telephone, for example, is connected to a wall outlet, or phone jack, by a telephone cord of a certain maximum length. Similarly, wires connect the telephone outlet with a local switching office of the telephone company. A telephone user's movement is thus restricted not only by the length of the telephone cord, but also by the availability of an operative telephone outlet, i.e. an outlet wich has been connected with the local switching office. Indeed, the genesis of cellular radio systems can be attributed, in large part, to the desire to overcome these restrictions and to afford the telephone user the freedom to move about or to travel away from his home or office without sacrificing his ability to communicate effectively with others. In a typical cellular radio system, the user, or the user's vehicle, carries a relatively small, wireless device which communicates with a base station and connects the user to other mobile stations in the system and to landline parties in the public switched telephone network (PSTN).

A significant disadvantage of existing cellular radio communication systems is the ease with which analog radio transmissions may be intercepted. In particular, some or all of the communications between the mobile station and the base station may be monitored, without authorization, simply by tuning an appropriate electronic receiver to the frequency or frequencies of the communications. Hence, anyone with access to such a receiver and an interest in eavesdropping can violate the privacy of the communications virtually at will and with total impunity. While there have been efforts to make electronic eavesdropping illegal, the clandestine nature of such activities generally means that most, if not all, instances of eavesdropping will go undetected and, therefore, unpunished and undeterred. The possibility that a competitor or a foe may decide to "tune in" to one's seemingly private telephone conversations has heretofore hindered the proliferation of cellular radio communication systems and, left unchecked, will continue to threaten the viability of such systems for businesses and government applications.

It has recently become clear that the cellular radio telecommunications systems of the furure will be implemented using digital rather than analog technology. The switch to digital is dictated, primarily,by considerations relating to system speed and capacity. A single analog, or voice, radio frequency (RF) channel can accommodate four (4) to six (6) digital, or data, RF channels. Thus, by digitizing speech prior to transmission over the voice channel, the channel capacity and, consequently the overall system capacity, may be increased dramatically without increasing the bandwidth of the voice channel. As a corollary, the system is able to handle a substantially greater number of mobile stations at a significantly lower cost.

Although the switch from analog to digital cellular radio systems ameliorates somewhat the likelihood of breeches in the security of communications between the base station and the mobile station, the risk of electronic eavesdropping is far from eliminated. A digital receiver may be contructed which is capable of decoding the digital signals and generating the original speech. The hardware may be more complicated and the undertaking more expensive than in the case of analog transmission, but the possibility persists that highly personal or sensitive conversations in a digital cellular radio system may be monitored by a third party and potentially used to the detriment of the system users. Morevover, the very possibility of a third party eavesdropping on a telephone conversation automatically precludes the use of cellular telecommunications in certain government applications. Certain business uses may be equally sensitive to the possibility of a security breech. Thus, to render cellular systems as viable alternatives to the conventional wireline networks, security of communications must be available on at least some circuits.

Once a decision has been made to protect the transmission of digital information (data) from unauthorized access, the originator (sender) and the intended recipient (receiver) of the data must agree on a secret mechanism for enciphering (encrypting) and deciphering (decrypting) the information. Such an agreement usually involves a mutual commitment to use a particular encryption device which may be widely available, but which can be programmed with a secret key specific to the sender and receiver. The agreement, however, must also include choices with respect to the encryption technique and the method of synchronization to be used by the encryption device.

Several encryption techniques are known and implemented by prior art encryption devices. In one such technique, known as "block substitution", the secret key bits are mixed with blocks of data bits to produce blocks of encrypted data. With block substitution, blocks of data bits which differ merely by a single bit produce encrypted data blocks which differ, on the average, in one half (1/2) of their bit positions, and vise versa. Similarly, encrypted data blocks differing only in one bit position will produce decrypted data blocks differing, on the average, in one half (1/2) of their bit positions. This type of encryption/decryption tends to magnify the effects of bit errors which may occur upon transmission of the encrypted data and, therefore, is not an appropriate technique for use in digital radio communications.

Another known encryption technique relies on a keystream generator and modular arithmetic or finite math. A plurality of secret key bits and a series of clock pulses are applied to the keystream generator which generates a stream of pseudo-random bits referred to as a keystream. The keystream bits are then bit-by-bit modulo-2 added to the data bits prior to transmission by the sender. An identical keystream generator is used by the receiver to produce an identical keystream of bits which are then bit-by-bit modulo-2 subtracted from the received encrypted data stream to recover the original data. Proper implementation of this technique requires that the keystream generated at the receiver and subtracted from the encrypted data is in harmony with the keystream generated at the sender and added to the original data.

A variety of approaches to the issue of synchronization may be found in prior art encryption systems.In most encryption systems, synchronization may be viewed as an agreement between the sender and the receiver on the number of clock pulses to be applied from a common initial state until the generation of a particular bit. Other prior art encryption systems, however, do not keep a running count of the number of applied clock pulses and rely, instead, on the initialization of the sender and receiver to the same state at the beginning of a frame and the application of an identical number of clock pulses thereafter. The shortcoming of the latter scheme is the difficulty of reestablishing synchronization should the sender and receiver fall out of synchronization during a particular frame.

In the case the mobile radio system lacks a global time reference, i.e. a time reference which is common to all mobiles and base stations in the system, it is not possible to synchronize the mobiles and base stations to a common clock when the synchronization of a transmitting base station/mobile (or vice versa) is lost or drops off for some reason or other, for instance during hand-over. When the conversation taking place between the two stations is also ciphered, further problems can occur due to a drop-off in the synchromism for the actual ciphering code, thereby making decipher ing impossible.

A solution to this problem has been proposed in the International Patent Application WO91/04620, which describes a mobile radio system in which both speech/data and signalling information are ciphered. When both the crypted speech/data information and the signalling information drop-off, a ciphered (or non-ciphered) signal information is sent to the mobile, which discloses the number of frame intervals after which ciphering shall be recommenced subsequent to said drop-off, for instance during hand-over. This earlier proposed method, however, uses solely the associated control channel (FACCH) which transmits ciphered signalling for the synchronization. If the ciphered signalling transmitted in accordance with this method should fail, there is no other possiblity of resynchronizing the ciphering of speech/data and signalling information.

US patent 4,757,536 describes a method and arrangements for providing synchronization between a circuit for generating a first pseudo- random key stream of bits to be used in enciphering a stream of data bits with a circuit for generating a second pseudo-random key stream of bits to be used in deciphering the enciphered stream of data bits.

In this known method and arrangement, speech/data is transmitted and received at a high bit rate and with a unique format including synchronizing sequencies in lower data rate channels, such as guard band (GB), initialization vector (IV) and a selective signalling adress (SS).

The present invention does not use any unique format of the transceived speech/data or control signals, but utilizes the low rate data, for example, the well known SACCH-data to create a block count value transmitted to the receiver which, in the receiver, indicates the time when deciphering of the received ciphered data is to be started.

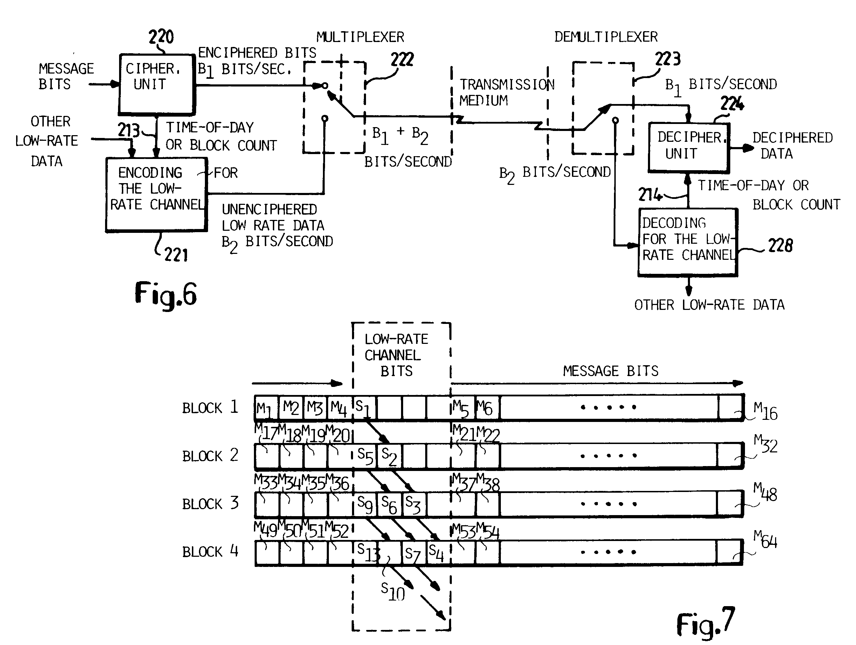

Also the EP-A1-0 073 323 discloses the transmission of synchronism information on a low rate data channel (in a superframe initialization vector) interspersed with transmissions of the enciphered data bitstream for synchronizing the generation of the second key bit stream (coming from a receive crypto bit buffer 416, Fig 5) for use in deciphering the enciphered data (in an exclusive OR-gate 410, Fig 5).

Differently from this known system the present method and system transmits a block value with the low rate data to the receiver of the system indicating a time in the form of a number of regular periodic intervals e.g. a number of data blocks which are to be counted before the deciphering is to be started in the receiver.

Yet another type of encryption system includes a counter which maintains a count of the number of keystream bits, or blocks of keystream bits, previously generated. The output bits of the counter are combined with the secret key bits to generate the keystream. Because the transmitter and receiver counters are incremented on a regular basis and, therefore, take on the characteristics of a digtal time/date clock, such an encryption system is often referred to as a time-of-day driven encryption system.

The advantage of the time-of-day driven encryption system resides in the fact that if the receiver counter falls out of synchronization with the transmitter counter and the system has the capability of providing the receiver with the current transmitter counter value, the receiver counter may be immediately reset to the transmitter counter value instead of returning to the beginning and applying the entire history of clock pulses. The difficulty with such a system, however, is the provision of the transmitter counter value on a sufficiently frequent basis to avoid the accumulation of errors caused by the divergence of the receiver counter value from the transmitter counter value for a relatively long period of time. The present invention prevents such accumulation of errors by providing continuous or very frequent updates of the transmitter counter value which may be used to reset the receiver counter and to resynchronize the system without the necessity of reinitialization and repetition of the intervening clock pulses.

### SUMMARY OF THE INVENTION

In one aspect of the invention there is included a method of communicating cryptographically encoded data within a digital telecommunications system in which a first pseudo-random key stream of bits is generated in accordance with an algorithm that is a function of a multi-bit digital value contained in a first register. The value contained in the first register is incremented at regular periodic intervals to vary the pattern of bits in the first key stream. The bits of the first pseudorandom key stream are combined with a stream of data bits carrying communications information to cryptographically encode the data and the encoded data is transmitted to a receiver.

Also transmitted to the receiver at regular periodic intervals and interspersed with the transmissions of encoded data is the value contained in said first register. A second pseudo-random key stream of bits is generated in accordance with the algorithm which is a function of a multi-bit digital value contained in a second register. The value contained in the second register is incremented at the same regular periodic intervals as the first register to vary the pattern of bits in the second key stream in an identical fashion to the pattern of bits in the first key stream. The bits of the second pseudo-random key stream are combined with the received stream of cryptographically encoded data to decode the data into the communications information and the value contained in the second register is periodically compared with the received value of the first register to determine whether the two values match for corresponding moments of time andwhether the first and second key streams are in synchronism with one another. In a related aspect, the value contained in the second register is reset with the received value of the first register for a corresponding moment in time when the values have become diffent to resynchronize the first and second key streams with one another.

In another aspect of the invention there is included a method for duplex communication of cryptographically encoded data within a digital telecommunications system. In this aspect a first pseudo-random key stream of bits in generated at a first location in accordance with an algorithm which is a function of a multi-bit digital value contained in a first register. The value contained in said first register is incremented at regular periodic intervals to vary the pattern of bits in the first key stream. The bits of the first pseudo-random key stream is combined with a stream of data bits carrying communications information to be sent from the first location to a second location to cryptographically encode the data stream and with a stream of cryptographically encoded data stream received from the second location. The data stream encoded at the first location is transmitted to a receiver at the second location along with the value contained in the first register which is sent at regular periodic intervals and interspersed with the transmissions of encoded data. A second pseudo-random key stream of bits which is a function of a multi-bit digital value contained in the second register is generated in accordance with the algorithm. The value contained in the second register is incremented at the same regular periodic intervals as the first register to vary the pattern of bits in the second key stream in an identical fashion to the pattern of bits in the first key stream. The bits of the second pseudo-random key stream are combined with the stream of cryptographically encoded data received at the second location to decode the data into the communications information and with a stream of data bit carrying communications information to be sent from the second location to the first location to crytographically encode the data stream. The data stream encoded at the second location is transmitted to a receiver at the first location and the value contained in the second register is periodically compared with the received value of the first register to determine whether the two values correspond for corresponding moments of time and whether the first and second key streams are in synchronism with one another.

The drawback with the earlier proposed method of maintaining synchronization for ciphering purposes is that there is only one possibility of reestablishing synchronization, namely over the associated control channel FACCH, which normally transmits the synchronizing information contained by the random bit flow superimposed on the speech/data flow and the signalling flow. There is, however, a further associated control channel, the so-called slow associated control channel SACCH which could be used for transmitting synchronizing information. The present method can be applied to a mobile radio system which, in addition to the aforesaid fast associated control channel FACCH, also includes a slow associated control channel SACCH.

Thus, according to still another aspect of the present invention, information concerning frame synchronization is transmitted continuously between the two stations, in the form of a sequence or order number for the frames of the master station, i.e. even when the ciphered transmission between a master station (base station) and a slave station (mobile station) functions normally. This information is transmitted continuously over the slow associated control channel SACCH. If synchronization over the fast associated control channel FACCH drops-off, for instance during hand-over, there is provided a further possibility of synchronizing the frame generator of the slave station to the frame generator of the master station, and therewith ciphering between the stations.

One object of the present invention is therefore to provide a reserve possiblity for synchronizing ciphered transmission of speech/data signals between a stationary and a mobile station in a mobile radio system which includes a fast and a slow associated control channel.

### BRIEF DESCRIPTION OF THE DRAWINGS

The present invention will be better understood and its numerous objects and advantages will become apparent to those skilled in the art by reference to the following drawings in which:
FIG. 1 is a pictorial representation of a cellular radio communications system including a mobile switching center, a plurality of base stations and a plurality of mobile stations;
FIG. 2 is a schematic block diagram of mobile station equipment used in accordance with one embodiment of the system of the present invention;
FIG. 3 is a schematic block diagram of base station equipment used in accordance with one embodiment of the system of the present invention;
FIG. 4 is a schematic block diagram of a prior art time-of-day driven encryption system;
FIG. 5 is a pictorial representation of a message format used by a known synchronization mechanism;
FIG. 6 is a schematic block diagram of a time-of-day or block-count driven encryption system which includes a synchronization mechanism constructed in accordance with the present invention; and
FIG. 7 is a pictorial representation of an exemplarly multiplexing format which may be used in accordance with the present invention.
FIG. 8 is a simplified block diagram of base station equipment illustrating that part of a base station in which the proposed method is applied, and
FIG. 9 is a time diagram which illustrates the proposed method.

### DETAILED DESCRIPTION OF THE PREFERRED EMBODIMENT

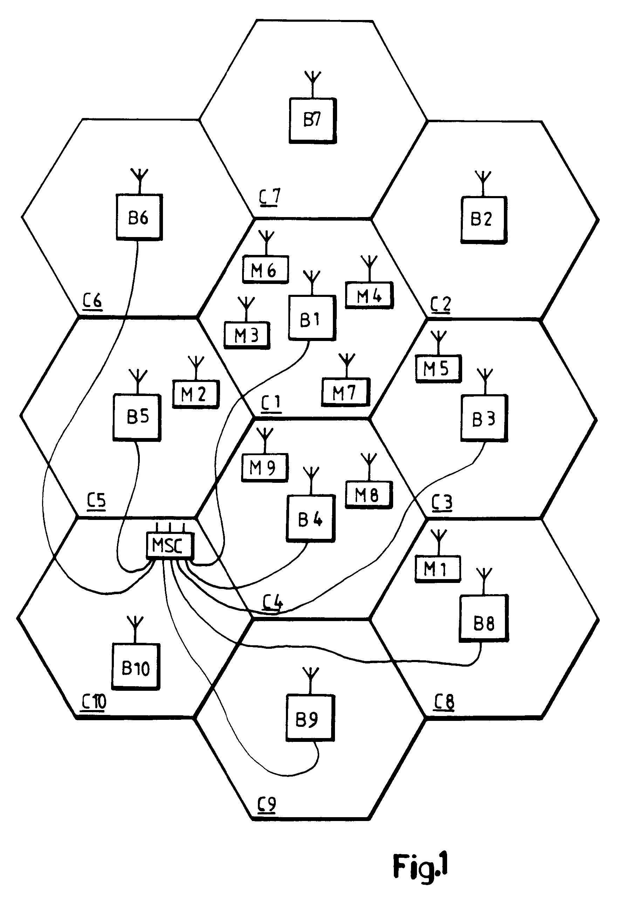

Referring first to FIG. 1, there is illustrated therein a conventional cellular radio commmunications system of a type to which the present invention generally pertains. In FIG. 1, an arbitrary geographic area may be seen divided into a plurality of contiguous radio coverage areas, or cells, C1-C10. While the system of FIG. 1 is shown to include only 10 cells, it should be clearly understood that, in practice, the number of cells may be much larger.

Associated with and located within each of the cells C1-C10 is a base station designated as a corresponding one of a plurality of base stations B1-B10. Each of the base stations B1-B10 includes a transmitter, a receiver and controller as is well known in the art. In FIG. 1, the base stations B1-B10 are located at the center of the cells C1-C10, respectively, and are equipped with omni-directional antennas. However, in other configurations of the cellular radio system, the base stations B1-B10 may be located near the periphery, or otherwise away from the centers of the cells C1-C10 and may illuminate the cells C1-C10 with radio signals either omni-directionally or directionally. Therefore, the representation of the cellular radio system of FIG. 1 is for purposes of illustration only and is not intended as a limitation on the possible implementations of the cellular radio system.

With continuing reference to FIG. 1, a plurality of mobile stations M1-M10 may be found within the cells C1-C10. Again, only ten mobile stations are shown in FIG. 1 but it should be understood that the actual number of mobile stations may be much larger in practice and will invariably exceed the number of base stations. Moreover, while none of the mobile stations M1-M10 may be found in some of the cells C1-C10, the presence or absence of the mobile stations M1-M10 in any particular one of the cells C1-C10 should be understood to depend, in practice, on the individual desires of each of the mobile stations M1-M10 who may roam from one location in a cell to another or from one cell to an adjacent or neighboring cell.

Each of the mobile stations M1-M10 is capable of initiating or receiving a telephone call through one or more of the base stations B1-B10 and a mobile switching center MSC. The mobile switching center MSC is connected by communications links, e.g. cables, to each of the illustrative base stations B1-B10 and to the fixed public switching telephone network (PSTN), not shown, or a similar fixed network which may include an integrated system digital network (ISDN) facility. The relevant connections between the mobile switching center MSC and the base stations B1-B10, or between the mobile switching center MSC and the PSTN or ISDN, are not completely shown in FIG. 1 but are well known to those of ordinary skill in the art. Similarly, it is also known to include more than one mobile switching center in a cellular radio system and to connect each additional mobile switching center to a different group of base stations and to other mobile switching centers via cable or radio links.

Each of the cells C1-C10 is allocated a plurality of voice or speech channels and at least one access or control channel. The control channel is used to control or supervise the operation of mobile stations by means of information transmitted to and received from those units. Such information may include incoming call signals, outgoing call signals, page signals, page response signals,location registration signals,voice channel assignments, maintenance instructions and "handoff" instructions as a mobile station travels out of the radio coverage of one cell and into the radio coverage of another cell. The control or voice channels may operate either in an analog or a digital mode or a combination thereof. In the digital mode, analog messages, such as voice or control signals, are converted to digital signal representations prior to transmission over the RF channel. Purely data messages, such as those generated by computers or by digitized voice devices, may be formatted and transmitted directly over a digital channel.

In a cellular radio system using time division multiplexing (TDM), a plurality of digital channels may share a common RF channel. The RF channel is divided into a series of "time slots", each containing a burst of information from a different data source and separated by guard time from one another, and the time slots are grouped into "frames" as is well known in the art. The number of time slots per frame varies depending on the bandwidth of the digital channels sought to be accommodated by the RF channel. The frame may, for example, consist of three (3) time slots, each of which is allocated to a digital channel. Thus, the RF channel will accommodate three digital channels. In one embodiment of the present invention discussed herein, a frame is designated to comprise three time slots. However, the teachings of the present invention should be clearly understood to be equally applicable to a cellular radio system utilizing any number of time slots per frame.

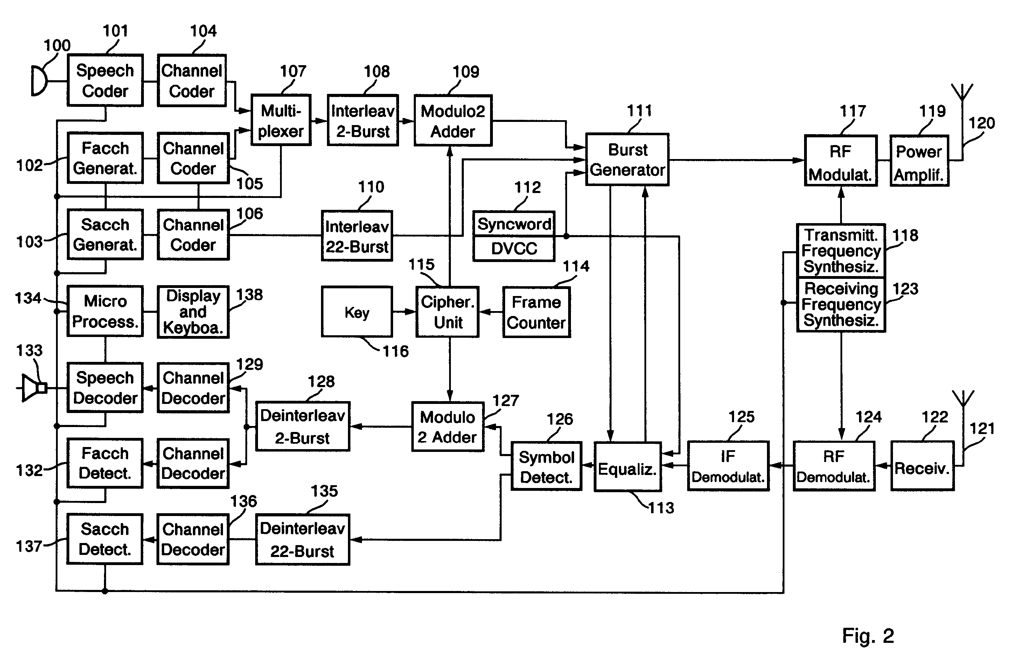

Referring next to FIG. 2, there is shown therein a schematic block diagram of the mobile station equipment wich are used in accordance with one embodiment of the present invention. The equipment illustrated in FIG. 2 may be used for communication over digital channels. A voice signal detected by a microphone 100 and destined for transmission by the mobile station is provided as input to a speech coder 101 which converts the analog voice signal into a digital data bit stream. The data bit stream is then divided into data packets or messages in accordance with the time division multiple access (TDMA) technique of digital communications. A fast associated control channel (FACCH) generator 102 exchanges control or supervisory messages with a base station in the cellular radio system. The conventional FACCH generator operates in a "blank and burst" fashion whereby a user frame of data is muted and the control message generated by the FACCH generator 102 is transmitted instead at a fast rate.

In contrast to the blank and burst operation of the FACCH generator 102, a slow associated control channel (SACCH) generator 103 continuously exchanges control messages with the base station. The output of the SACCH generator is assigned a fixed length byte, e.g. 12 bits, and included as a part of each time slot in the message train (frames). Channel coders 104, 105, 106 are connected to the speech coder 101, FACCH generator 102 and SACCH generator 103, respectively. Each of the channel coders 104, 105 106 performs error detection and recovery by manipulating incoming data using the techniques of convolutional encoding, which protects important data bits in the speech code, and cyclic redundancy check (CRC), wherein the most significant bits in the speech coder frame, e.g., 12 bits, are used for computing a 7 bit error check.

Referring again to FIG. 2, the channel coders 104, 105 are connected to a multiplexer 107 which is used for time division multiplexing of the digitized voice messages with the FACCH supervisory messages. The output of the multiplexer 107 is coupled to a 2-burst interleaver 108 which divides each data message to be transmitted by the mobile station (for example, a message containing 260 bits) into two equal but separate parts (each part containing 130 bits) arranged in two consecutive time slots. In this manner, the deteriorative effects of Rayleigh fading may be significantly reduced. The ouput of the 2-burst interleaver 108 is provided as input to a modulo-2 adder 109 where the data to be transmitted is ciphered on a bit-by-bit basis by logical modulo-2 addition with a pseudo-random keystream which is generated in accordance with the system of the present invention described below.

The output of the channel coder 106 is provided as input to a 22-burst interleaver 110. The 22-burst interleaver 110 divides the SACCH data into 22 consecutive time slots, each occupied by a byte consisting of 12 bits of control information. The interleaved SACCH data forms one of the inputs to a burst generator 111. Another input to the burst generator 111 is provided by the output of the modulo-2 adder 109. The burst generator 111 produces "message bursts" of data, each consisting of a time slot identifier (TI), a digital voice color code (DVCC), control or supervisory information and the data to be transmitted, as further explanied below.

Transmitted in each of the time slots in a frame is a time slot identifier (TI), which is used for time slot identification and receiver synchronization, and a digital voice color code (DVCC), which ensures that the proper RF channel is being decoded. In the exemplary frame of the present invention, a set of three different 28-bit TIs is defined, one for each time slot while an identical 8-bit DVCC is transmitted in each of the three time slots. The TI and DVCC are provided in the mobile station by a sync word/DVCC generator 112 connected to the burst generator 111 as shown in FIG. 2. The burst generator 111 combines the outputs of the modulo-2 adder 109, the 22-burst interleaver 110 and the sync word/DVCC generator 112 to produce a series of message bursts, each comprised of data (260 bits), SACCH information (12 bits), TI (28 bits), coded DVCC (12 bits) and 12 delimiter bits for a total of 324 bits which are integrated according to the time slot format specified by the EIA/TIA IS-54 standard.

Each of the message bursts is transmitted in one of the three time slots included in a frame as discussed hereinabove. The burst generator 111 is connected to an equalizer 113 which provides the timing needed to synchronize the transmission of one time slot with the transmission of the other two time slots. The equalizer 113 detects timing signals sent from the base station (master) to the mobile station (slave) and synchronizes the burst generator 111 accordingly. The equalizer 113 may also be used for checking the values of the TI and the DVCC. The burst generator 111 is also connected to a 20ms frame counter 114 which is used to update a ciphering code that is applied by the mobile station every 20ms, i.e., once for every transmitted frame. The ciphering code is generated by a ciphering unit 115 with the use of a mathematical algorithm and under the control of a key 116 which is unique to each mobile station. The algorithm may be used to generate a pseudo-random keystream in accordance with the present invention and as discussed further below.

The message bursts produced by the burst generator 110 are provided as input to an RF modulator 117. The RF modulator 117 is used for modulating a carrier frequency according to the π/4-DQPSK technique (π/4 shifted, differentially encoded quadrature phase shift key). The use of this technique implies that the information to be transmitted by the mobile station is differentially encoded, i.e., two bit symbols are transmitted as 4 possible changes in phase: + or - π/4 and + or - 3π /4. The carrier frequency for the selected transmitting channel is supplied to the RF modulator 117 by a transmitting frequency synthesizer 118. The burst modulated carrier signal output of the RF modulator 117 is amplified by a power amplifier 119 and then transmitted to the base station through an antenna 120.

The mobile station receives burst modulated signals from the base station through an antenna 121 connected to a receiver 122. A receiver carrier frequency for the selected receiving channel is generated by a receiving frequency synthesizer 123 and supplied to an RF demodulator 124. The RF demodulator 124 is used to demodulate the received carrier signal into an intermediate frequency signal. The intermediate frequency signal is then demodulated further by an IF demodulator 125 which recovers the original digital information as it existed prior to /4-DQPSK modulation. The digital information is then passed through the equalizer 113 to a symbol detector 126 which converts the two-bit symbol format of the digital data provided by the equalizer 114 to a single bit data stream.

The symbol detector 126 produces two distinct outputs: a first output, comprised of digitzed speech data and FACCH data, and a second output, comprised of SACCH data. The first output is supplied to a modulo-2 adder 127 which is connected to a 2-burst deinterleaver 128. The modulo-2 adder 127 is connected to the ciphering unit 115 and is used to decipher the 4 encrypted transmitted data by subtracting on a bit-by-bit basis the same pseudo-random keystream used by the transmitter in the base station encrypt the data and which is generated in accordance with the teachings of the present invention set forth below. The modulo-2 adder 127 and the 2-burst deinterleaver 128 reconstruct the speech/FACCH data by assembling and rearranging information derived from two consecutive frames of the digital data. The 2-burst deinterleaver 128 is coupled to two channel decoders 129, 130 which decode the convolutionally encoded speech/FACCH data using the reverse process of coding and check the cyclic redundancy check (CRC) bits to determine if any error has occurred. The channel decoders 129, 130 detect distinctions between the speech data on the one hand, and any FACCH data on the other, and route the speech data and the FACCH data to a speech decoder 131 and an FACCH detector 132, respectively. The speech decoder 131 processes the speech data supplied by the channel decoder 129 in accordance with a speech coder algorithm, e.g. VSELP, and generates an analog signal representative of the speech signal transmitted by the base station and received by the mobile station. A filtering technique may then be used to enhance the quality of the analog signal prior to broadcast by a speaker 133. Any FACCH messages detected by the FACCH detector 132 are forwarded to a microprocessor 134.

The second output of the symbol detector 126 (SACCH data) is supplied to a 22-burst deinterleaver 135. The 22-burst interleaver 135 reassembles and rearranges the SACCH data which is spread over 22 consecutive frames. The output of the 22-burst deinterleaver 135 is provided as input to a channel decoder 136. SACCH messages are detected by an SACCH detector 137 and the control information is transferred to the microprocessor 134.

The microprocessor 134 controls the activities of the mobile station and communications between the mobile station and the base station. Decisions are made by the microprocessor 134 in accordance with messages received from the base station and measurements performed by the mobile station. The microprocessor 134 is also provided with a terminal keyboard input and display output unit 138. The keyboard and display unit 138 allows the mobile station user to exchange information with the base station.

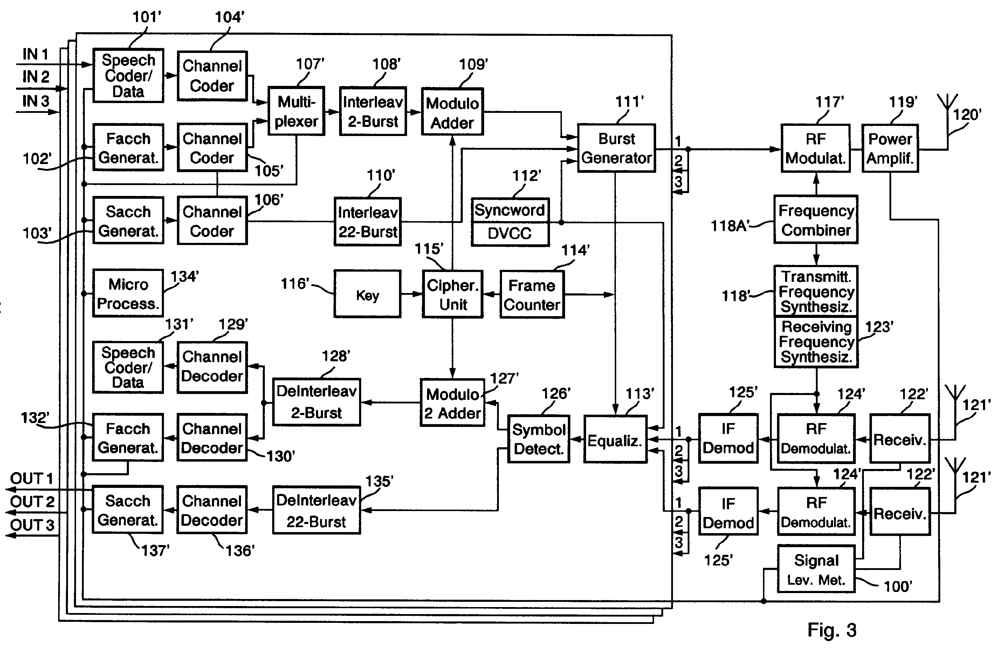

Referring next to FIG. 3, there is shown a schematic block diagram of the base station equipment which are used in accordance with the present invention. A comparison of the mobile station equipment shown in FIG. 2 with the base station equipment shown in FIG. 3 demonstrates that much of the equipment used by the mobile station and the base station are substantially identical in construction and function. Such identical equipment are, for the sake of convenience and consistency, designated with the same reference numerals in FIG. 3 as those used in connection with FIG. 2, but are differentiated by the addition of a prime (′) in FIG. 3.

There are, however, some minor differences between the mobile station and the base station equipment. For instance, the base station has, not just one but, two receiving antennas 121′. Associated with each of the receiving antennas 121′ are a receiver 122′, an RF demodulator 124′, and an IF demodulator 125′. Furthermore, the base station includes a programmable frequency combiner 118A′ which is connected to a transmitting frequency synthesizer 118′. The frequency combiner 118A′ and the transmitting frequency synthesizer 118′ carry out the selection of the RF channels to be used by the base station according to the applicable cellular frequency reuse plan. The base station, however, does not include a user keyboard and display unit similar to the user keyboard and display unit 138 present in the mobile station. It does however include a signal level meter 100′ connected to measure the signal received from each of the two receivers 122′ and to provide an output to the microprocessor 134′. Other differences in equipment between the mobile station the base station may exist which are well known in the art.

The discussion thus far has focused on the operational environment of the system of the present invention. A specific description of a particular embodiment of the present invention follows. As disclosed above and used hereinafter, the term "keystream" means a pseudo-random sequence of binary bits or blocks of bits used to encipher a digitally encoded message or data signal prior to transmission on storage in a medium which is susceptible to unauthorized access, e.g., an RF channel. A "keystream generator" means a device which generates a keystream by processing a secret key comprised of a plurality of bits. Encryption may be simply performed by a modulo-2 addition of the keystream to the data to be encrypted. Similarly, decryption is performed by a modulo-2 subtraction of an identical copy of the keystream from the encrypted data.

Generally speaking, the keystream generator provides a mechanism, represented by elements 115 and 115′ of FIG. 2 and 3, respectively, for expanding a relatively small number of secret bits, i.e., the secret key, represented by elements 116 and 116′, into a much larger number of keystream bits which are then used to encrypt data messages prior to transmission (or storage). To decrypt an encoded message, the receiver must "know" the index to the keystream bits used to encrypt the message. In other words, the receiver must not only have the same keystream generator and generate the same keystream bits as the transmitter, but also, the receiver keystream generator must be operated in synchronism with the transmitter keystream generator if the message is to be properly decoded. Synchronization is normally achieved by transmitting from the encoding system to the decoding system the initial contents of every internal memory device, such as bit, block or message counters, which participate in the generation of the keystream bits. Synchronization may be simplified, however, by using arithmetic bit block counters, such as binary counters, and increamenting those counters by a cerrtain amount each time a new block of keystream bits is produced. Such counters may form a part of a real-time, i.e. hours, minutes and seconds, clock chain. A keystream generator relying on the latter type of counters is known as the "time-of-day" driven keystream generator to which reference was made hereinabove.

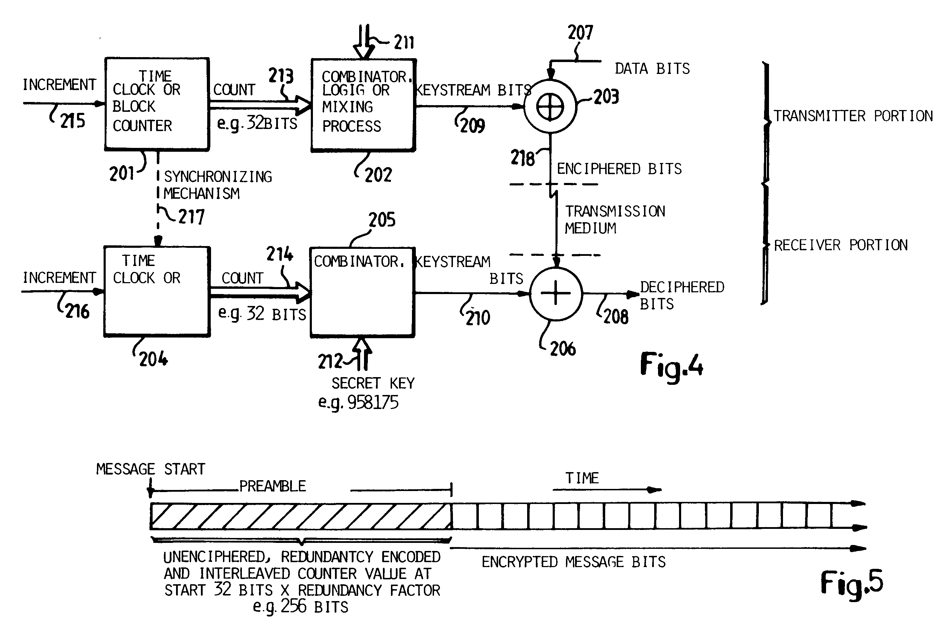

Referring now to FIG. 4, aschematic block diagram of a prior art time-of-day driven encryption system may now be seen. The upper half of FIG. 4 represents the transmitter portion, and the lower half represents the receiver portion, of such an encryption system. In the transmitter portion, a time clock or block counter 201 generates a count 213, for example, a 32-bit output, in response to an increment 215 applied at the input of the time clock or block counter 201. The count 213 is provided as a first input to a combinatorial logic or mixing process 202. A secret key, for example, the value 968173 in binary notation, is provided as a second input 211 to the combinatorial logic or mixing process 202. With each occurrence of a new value for the count 213, the combinatorial logic or mixing process 202 combines or mixes the secret key 211 with the count 213 and generates a plurality of pseudo-random keystream bits at a serial or parallel output 209. The keystream output 209 is then provided as an input to a modulo-2 adder 203. The data to be encrypted forms a second input 207 to the modulo-2 adder 203. Each of the keystream bits is modulo-2 added to a particular data bit by the modulo-2 adder 203 and the encrypted data is supplied to output 218 for transmission through the medium.

In the receiver portion, a time clock or block counter 204, which is identical in construction to the time clock or block counter 201 and is provided with an increment 216 identical to the increment 215, supplies a count 214 to a combinatorial logic or mixing process 205, which is identical in construction to the combinatorial logic or mixing process 202. The combinatorial logic or mixing process 205 combines or mixes the count 214 with an identical secret key, i.e., 968173 in binary notation, which is provided at input 212, thereby producing a keystream at an output 210 which is identical to the keystream produced at the output 209. The keystream output 210 is bit-by-bit modulo-2 added to the encrypted data received over the transmission medium by a modulo-2 adder 206. Since modulo-2 addition and modulo-2 subtraction are the same operation, the modulo-2 addition of the identical keystream at the receiver cancels the previous addition of the keystream at the transmitter and results in the recovery of the original data at output 208. Note, however, that such cancellation and proper deciphering of the encrypted data will occur only if the time clocks or block counters 2f01, 204 are perfectly synchronized with one another. An appropriate synchronization mechanism 217 must be provided for this purpose.

Referring next to FIG. 5, there is shown therein a message format used by a known synchronization mechanism. The message format reflects the arrangement of data in each time slot (burst) of a frame. Immediately following the beginning of each message, i.e., after message start, all the state values (output bits) of the time clock or block counter 201, e.g., all 32 bits of the count 213, are transmitted as a preamble to a sequence of encrypted message bits. To avoid transmission errors which could cripple synchronization, the count bits are preferably redundantly encoded using a powerful error correction code and the coded bits interleaved within the transmitted signal to disperse the redundancy in time thereby increasing tolerance to burst errors. The coding of the count bits should expand the number of bits to be transmitted by a considerable factor, for example, a factor of eight (8), so as to provide the redundancy needed to attain close to a hundred percent (100%) probability of error-free transmission of the encoded count bits. Following the transmission of the redunantly encoded but unencrypted preamble, the encrypted message bits are transmitted over the transmission medium.

The synchronization mechanism illustrated in FIG. 5 may perhaps be adequate for communications ove simplex channels, i.e., "press-to-talk" or "over/over" radiotelephony. If an "over" is missed due to faulty synchronization, the user can simply request a repeat of that transmission. By comparison, communications over duplex channels, i.e., normal bi-directional radiotelephony, typically do not switch directions in an "over/over" fashion and conversations, once established, frequently continue for a substantial period of time. If a duplex communications system has no means of establishing synchronization other than at the beginning of a call, a loss of synchronization during the call would result in a loss of the call forcing the user to reestablish communications by placing another call. In the context of a cellular radio system utilizing encryption/decryption devices, such a loss of synchronization would require the user to take some affirmative action, for example to redial the desired telephone number. The present invention provides a method and apparatus which obviate the necessity and inconvenience of redial upon loss of synchronization and which provide frequient opportunities during an ongoing radio telephone conversation to quickly correct any loss of synchronization of synchronization between the transmitter portion and the receiver portion described in connection with FIG. 4.

In the discussion of FIGs. 1-3, mention was made of the Slow Associated Control Channel (SACCH) which is used to convey a low rate data stream of management and control information between the mobile station and the base station and vice versa. The SACCH is often used by the mobile station for the transmission of signal strength information that allows the system to determine which of the surrounding base stations is best suited for maintaining contact with the mobile station. As discussed hereinbefore, the SACCH information bits are interleaved and multiplexed with the voice traffic bits prior to transmission. The present invention makes additional use of the SACCH to continuously broadcast the state of the time clock or block counter which, as previously described, controls the operation of the time-of-day or block-count driven encryption device.It should be clearly understood, however, that the teachings of the present invention encompass the use of any other low bit rate auxiliary channel which may be available in the system.

Referring now to FIG. 6, there is shown therein a schematic block diagram of time-of-day or block-count driven encryption system, including a synchronization mechanism constructed in accordance with the present invention. A ciphering unit 220 at the transmitter, e.g., the transmitter portion in FIG. 5, converts a stream of message bits into a stream of enciphered bits for transmission at a mean data rate of B₁ bits/second. The ciphering unit 220 also provides a current time-of-day or block count, e.g., the count 213, to an auxiliary, low rate channel encoder 221. Depending on the extent of other low-rate data, the encoder 221 may include the encoded time-of-day or block count in an output stream generated at an average rate of B2 bits/second. The auxiliary stream of B2 bits/second is then combined with the enciphered message stream of B1 bits/second by a multiplexer 222 to produce a stream of B1+B2 bits/second for transmission over the communications medium.

It should be recognized that other overhead bits, such as demodulator synchronization patterns or further redundancy of the data in the form of error correction coding, may be added prior to transmission of the stream of B1+B2 bits/second, but is not specifically shown in the simplified block diagram of FIG. 6. Moreover, the use of the burst transmission technique (discussed in connection with FIGs. 1-3) may result in a burst bit rate greater than B1+B2 bits/second over the transmission medium. Nevertheless, after performance of the inverse of such encoding processes at the receiver, an average bit rate of B1+B2 bits/second should once more emerge at the input to a demultiplexer 223 which divides the incoming stream of B1+B2 bits/second into an enciphered message stream of B1 bits/second and an encoded low-rate control stream of B2 bits/second. The B1 bits/second enciphered message stream is provided as input to a deciphering unit 24 (the receiver portion of FIG. 5) which generates a stream of deciphered data. The B2 bits/second control stream, on the other hand, is supplied to an auxiliary, low-rate channel decoder 228.

The auxiliary channel decoder 228 detects the receipt of any time-of-day or block count data which may have been transmitted by the encryption device and checks to determine whether such data was correctly received before resetting the decryption device. The error check is performed in order to avoid resetting the time clock or block counter at the receiver, e.g., the time clock or block counter 204, with a new time-of-day or block count which is inaccurate due to transmission errors. A correctly received time-of-day or block count is passed from the auxiliary channel decoder 228 to the deciphering unit 224 where the received count is used to verify and, if necessary, update the current count at the decryption device, e.g., the count 214 in FIG. 5.

The process of verifying and updating of the receiver block count includes a number of steps and safeguards. In particular, account must be taken of the transmission delays through the auxiliary channel. For example, as discussed in connection with FIGs. 1-3, the SACCH data is usually interleaved or spread over a plurality of consecutive message frames. Thus, for example, the transmitter block count value for a frame x at a specific moment of time is spread over y frames and transmitted in a series of frames, x, x+1, x+2, ..., x+y. The delay y, however, is a system-defined constant number which may be added at the receiver to the block count value derived from the frames x, x+1, x+2, ..., x+y and a current transmitter block count value obtained. The current transmitter block count value is then compared to the current receiver block count value and, in the event of divergence, the receiver block counter is reset to the value of the transmitter block counter for the corresponding moment of time.

Further error protection may be built into the method of resetting the receiver block count, in the event of disagreement with the transmitter block count, by imposing a more severe criterion for resetting the most significant bits, or for otherwise causing a drastic step change in the receiver count value. The latter may be achieved, for example, by using the technique of "majority vote" over several count transfers, after allowing for the known increment between times.

It will be appreciated from the foregoing description that the present invention provides a synchronization mechanism which may be used independently of the ciphering unit 220 and the deciphering unit 224, respectively. The encryption of data in the communications system may be performed by modulo-2 addition of the keystream to the data stream, by random transposition of the data, i.e., alteration of the order in which the data bits normally appear in the message format, or by a combination of these techniques without departing in the least from the teachings of the present invention as disclosed above and further described below.

In duplex communication applications, such as mobile radio telephony, the present invention, as heretofore illustrated and described, may be used independently in each direction. Specifically, the encryption device used for encrypting transmissions in one direction may include a time clock or block counter which is separate from, and possibly unrelated to, the time clock or block counter of the decryption device used for decrypting receptions in the other direction. Similarly, the auxiliary low-rate channel, which is used to periodically transfer the count state value in accordance with the present invention, is a duplex channel providing simultaneous, bidirectional communications. An advantageous alternative arrangement would rely on a single time-of-day or block-count driven keystream generator at each end of the communications link to produce a sufficient number of keystream bits for use both in enciphering data messages prior to transmission and in deciphering received data messages.

Assuming that the number of message bits in a transmitted or received block in either direction is the same, and equal to N, the keystream generator at one end of the communications link would produce, using the same secret key bits and block counts as in the case of two keystream generators, a first N keystream bits, A=(a1, a2, a3...aN), for enciphering transmitted messages and a second N keystream bits, B=(a(n+1),a(n+2)...a(2N)), for deciphering received messages. The use of the N-bit keystreams A,B for enciphering and deciphering, respectively, would then be reversed at the other end of the communications link. Hence, only one block count synchronization is necessary and this synchronization may be achieved using the low-rate auxiliary channel in one direction only.

As mentioned earlier, the chief function of the SACCH is to carry signal strength information from the mobile station to a base station in the land network. The SACCH in the opposite direction, i.e., base station to mobile station, exists mainly because of symmetry reasons and often lays idle. Consequently, it may be advantageous to designate the base station's time clock or block counter as the "master" and to periodically transmit the base station's count value in the frequently idle SACCH direction to the mobile station so as to provide continuous resynchronization in accordance with the foregoing description of the present invention. Should the need arise to transfer some other low-rate data over the SACCH in the direction of land network to mobile station, the other data may be accorded priority and transmission of the base station count value may be resumed thereafter. In this aspect of the present invention, transmission of the time-of-day or block count value may be considered to representant the default state of the SACCH channel in the direction of land network to mobile which is interupted for the transmission of higher priority messages.

The N or 2N bits produced by a keystream generator with each new value of the associated time clock or block counter are used for enciphering or deciphering groups of N message data bits in one or both directions, respectively. Multiplexed with these N-bit message groups are additional bits forming the auxiliary low-rate channel, which may be used, inter alia, for cipher synchronization in accordance with the present invention. Several different patterns may be used for multiplexing the auxiliary channel bits with the message data bits. However, to minimize the amount of overhead bits which are added to blocks of data by the auxiliary low-rate bit stream, a multiplexing format as illustrated in FIG. 7 may be selected.

Referring now to FIG. 7, there is shown therein an exemplary multiplexing format which may be used in accordance with the present invention. FIG. 7 illustrates how a small number of low-rate channel bits, S1, S2, S3, S4 etc., may be included in each N-bit message group, the whole auxiliary message format only repeated over a number of such groups. Assuming that the auxiliary bit stream contains its own message start indicator code, the auxiliary message length does not necessarily need to be contained in an integral number of message groups. However, auxiliary message synchronization may be simplified if the auxiliary message length is deliberately aligned with an integral number of traffic message blocks.

Figure 7 also illustrates how interleaving of the auxiliary bit streams over a number of message blocks may be used to disperse the burst errors that can arise if a whole message block, including auxiliary bits, is not correctly received. Where the decoder for the low-rate channel is equipped with error correcting coding, the dispersal of such burst errors enables the decoder to easily detect and correct such errors.

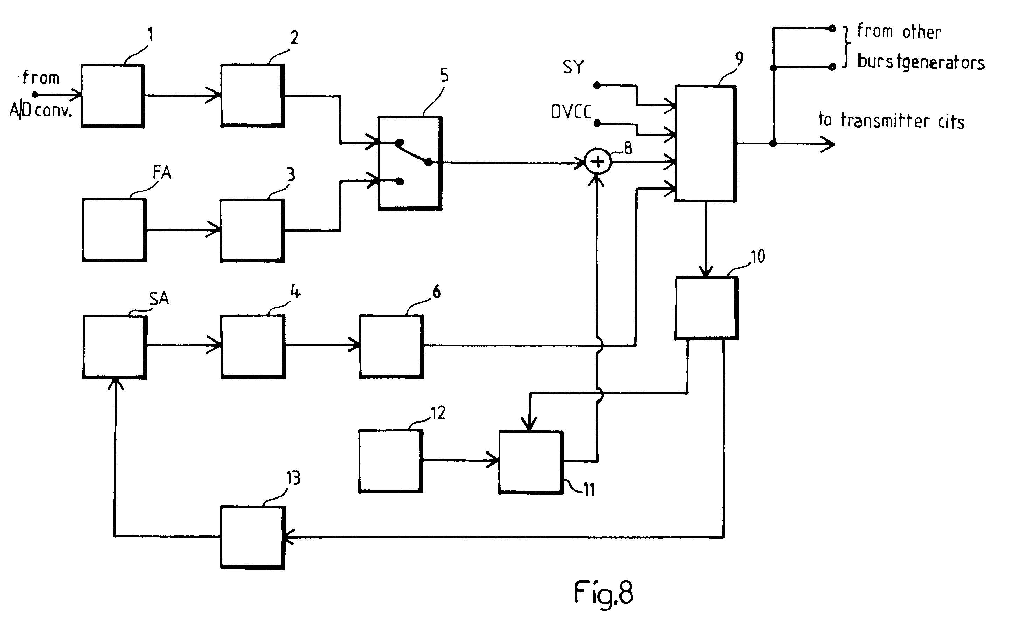

Another embodiment of the inventive method will now be described. Figure 8 is a block schematic which illustrates that part of a base station in which the inventive method is applied.

A speech coder 1 generates coded speech/data signals received from an analog/digital converter (not shown) and the speech-coded signals are passed to a channel coder 2, which introduces a given redundancy for the purpose of discovering and correcting bit errors in the speech/data block.

A FACCH-generator FA generates control and monitoring signals for transmission between the base station and a mobile station. These signals are generated in blocks and one such block can replace a speech/data block in a TDMA-frame in a known manner at any time whatsoever when the system finds it suitable. A FACCH-block includes a flag, a message and a check field so-called CRC, in total 65 bits. The FACCH-block is coded in the channel coder 3 so as to render the block more tolerable to bit errors than the speech/data block.

A SACCH-generator SA generates the control and monitoring messages between the base station and the mobile with a duration of 12 bits and occupies only a small part of a time slot in a TDMA-frame, although each time slot includes these SACCH-bits. The SACCH-generator SA is connected to a channel coder 4 and to an interleaver 6 which divides a SACCH-word into bursts, each of 12 bits, and interfoliates these bursts over a given number of frames.

The channel coders 2 and 3 have outputs connected to a selector 5. In one position of the selector (upper position), the channel coded speech/data signals from the channel coder 2 are delivered to an adder 8, whereas in the other position of the coder (bottom position), the associated control channel signals from the channel coder 3 are applied to the adder 8.

The various signals from the selector 5 and the interleaver 6, and a sync.-message SY and a verification code DVCC are combined in a burst generator 9 to form a single burst of signals which occupy a given time slot. All of these signals form a channel to a given receiving mobile and are thereafter modulated with a given carrier frequency.

Prior to transmission, the signals from the speech/data generator 1 and from the FACCH-generator FA shall be ciphered with a given ciphering code, whereas the SACCH-signals shall be transmitted unciphered. To this end, there is provided a cipher-generator 11 which generates a pseudo random sequence to the modulo-2 adder 8. In this way, the random sequence is added (mod 2) to the interfoliated speech/data signals and the FACCH-signals in the selector 5 and the signals are thus ciphered.

The cipher-generator is controlled by a cipher code from the unit 12 and by a frame counter 10, in a manner to generate the pseudo random sequence. In this case, the cipher code comprises the given configuration of a whole bit pattern of a pulse sequence and also the start of the pulse sequence. The starting time point of the pulse sequence within a frame is determined by the frame counter 10.

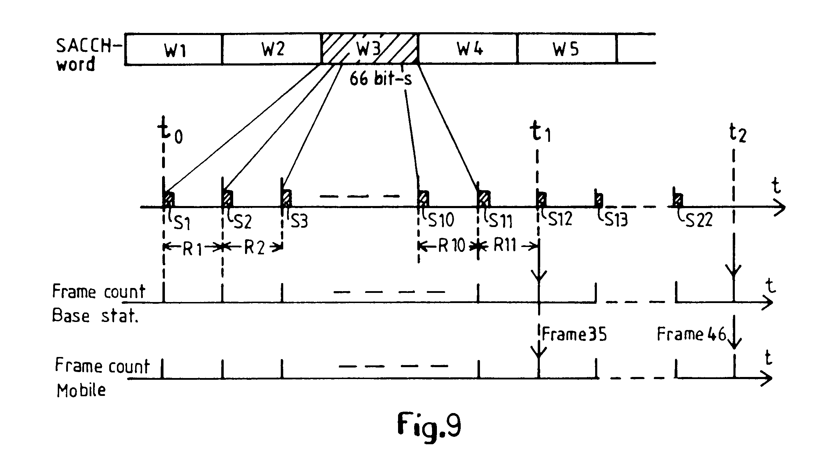

A microprocessor 13 is connected between the frame counter 10 and to a control input of the SACCH-generator SA for the purpose of carrying out the inventive method, which will now be described in more detail with reference to Figure 9.

The SACCH-generator SA in Figure 8 generates SACCH-words in sequence, each word containing 66 bits. Subsequent to passing through the channel coder 4, there is obtained a 132-bit word which contains parity bits, etc. The interleaver unit 6 groups these 132 bits in each word into groups of 12-bits, so that the burst generator 9 is able to transmit 12 bits from each SACCH-word in the duration of one time slot. Each SACCH-word is thus divided into 132/12 = 11 time slots during sequential frames, i.e. 11 frames are required for transmitting one SACCH word.

According to the proposed method, SACCH-words are used in sequence for transmitting continuously information concerning the frame count status (sequence number) of the base station to the frame counter of the mobile, for the purpose of synchronizing the two frame counters. Since the frame counters control the ciphering in the base station and in the mobile respectively, the ciphering can therefore also be synchronized. The base station transmits a given frame counter number via the SACCH-channel (non-ciphered), and the frame counter number of the mobile shall therewith coincide with the transmitted base station number while taking into account known delays and group transit times between base station and mobile.

At a given arbitrary time point tₒ, according to Figure 9, there is transmitted a burst S1 belonging to the SACCH-word W3, which contains information concerning the value to which the frame counter of the base station is set when receiving the SACCH-word W3 in the mobile. As an example, it is assumed that at the time tₒ of transmitting the SACCH-word, the base-station frame counter is set to the numerical value 24. It is also assumed in the Figure 9 example that the SACCH-word W3 is transmitted during the aforesaid 11 bursts, S1-S11, i.e. during the duration R1-R11 of the frame.

When the last burst S11 has been received in the mobile at t₁, the mobile will know the value transmitted from the base station. The frame counter of the base station has then reached the value 24 + 11 = 35. Thus, the value 35 in the SACCH-word W3 is transmitted to the mobile during the time interval tₒ-t₁. The frame counter value 35 obtained is compared in the mobile with its frame counter setting and a correction is made if the values do not coincide. Ciphering continues over the whole period and remains unchanged.

During the next SACCH-word W4, a new frame counter number, namely 46, is transmitted in a similar manner by means of the bursts S12-S22, since when this new number is received by the mobile at the time t₂, the frame counter of the base station is set to 35 + 11 = 46. The transmission of frame counter numbers from the base station to the mobile is continued continuously in the same manner, thereby enabling continuous monitoring of the frame counter of the mobile to be carried out and optional adjustments to be made to said counter. This enables ciphering to be constantly synchronized between base station and mobile, since ciphering is dependent on which frame counter number is sent to the ciphering generator 11 in Figure 8.

The aforesaid adjustment of the frame counter number of the base station with respect to the number of transmitted bursts S1-S11, S12-S22,... is carried out by the microprocessor 13 between the frame counter 10 and the SACCH-generator SA. The microprocessor 13 also corrects the value obtained from the frame counter 10 with respect to the time delay in the transmission circuits. The time delay constitutes a known parameter. The propagation time of the radio signal between base station and mobile is in the order of some microseconds, whereas the distance between two mutually sequential frames is 20 ms and is compensated for by means of the synchronizing word in a burst. The time delay parameter is thus not influenced by the propagation time over the radio medium. Thus, the proposed method makes possible non-ciphered signalling of synchronizing information for ciphering/deciphering between a base station and a mobile. This signalling is additional to the normal synchronization between the ciphered fast associated control channel FACCH and replaces this normal synchronization in the event of a drop-off.

The foregoing description shows only certain particular embodiments of the present invention. However, those skilled in the art will recognize that many modifications and variations bay be made without departing substantially from the spirit and scope of the present invention. Accordingly, it should be clearly understood that the form of the invention described herein is exemplary only and is not intended as a limitation on the scope of the invention as defined in the following claims.

## Claims

1. A method of communicating with cryptographically encoded data within a digital telecommunications system, comprising:
generating a first pseudo-random key stream of bits in accordance with an algorithm which is a function of a multi-bit digital value contained in a first register;
incrementing the value contained in said first register at regular periodic intervals to vary the pattern of bits in the first key stream;
combining the bits of the first pseudo-random key stream with a stream of data bits carrying communications information to cryptographically encode said data;
transmitting said encoded data to a receiver;
transmitting to said receiver at regular periodic intervals and interspersed with said transmissions of encoded data the value contained in said first register;
generating a second pseudo-random key stream of bits in accordance with said algorithm which is a function of a multibit digital value contained in a second register;
incrementing the value contained in said second register at the same regular periodic intervals as said first register to vary the pattern of bits in the second key stream in an identical fashion to the pattern of bits in the first key stream;
combining the bits of the second pseudo-random key stream with the received stream of cryptographically encoded data to decode said data into said communications information; and
periodically comparing the value contained in said second register with the received value of the first register to determine whether the two values correspond for corresponding moments of time and whether the first and second key streams are in synchronism with one another.

2. A method of communicating with cryptographically encoded data within a digital telecommunications system as set forth in Claim 1 which also includes:
resetting the value contained in said second register with the received value of the first register for a corresponding moment in time when the values have become different to resynchronize the first and second key streams with one another.

3. A method of communicating with cryptographically encoded data within a digital telecommunications system as set forth in Claim 1 in which:
said step of transmitting to said receiver at regular periodic intervals and interspersed with said transmissions of encoded data the value contained in said first register includes multiplexing said encoded data transmissions and said transmissions of first register values.

4. A method of communicating with cryptographically encoded data within a digital telecommunications system as set forth in Claim 3 in which:
said first register values are transmitted on a low bit rate auxiliary channel of a digital cellular communications stream.

5. A method of communicating with cryptographically encoded data within a digital telecommunications system as set forth in Claim 4 wherein:
said low bit rate auxiliary channel is a slow associated control channel.

6. A method of communicating with cryptographically encoded data within a digital telecommunications system as set forth in Claim 4 wherein:
said first register values are combined with other low-rate data on said low bit rate auxiliary channel.

7. A method of communicating with cryptographically encoded data within a digital telecommunications system as set forth in Claim 6 in which:
transmission of said first register values are temporarily interupted when it is necessary to transmit other data on said lowbit rate auxiliary channel.

8. A method of communicating with cryptographically encoded data within a digital telecommunications system as set forth in Claim 1 in which:
said step of periodically comparing the value contained in said second register with the received value of the first register to determine whether two values correspond for corresponding moments of time and whether the first and second key streams are in synchronism with one another includes adding to the received value of the first register an incremental value to account for a time delay in transmission.

9. A method of communicating with cryptographically encoded data within a digital telecommunications system as set forth in Claim 1 in which:
the bits of the first pseudo-random key stream are combined with said stream of data bits carrying communications information by modulo-2 addition; and
the bits of the second pseudo-random key stream are combined with the received stream of cryptographically encoded data by modulo-2 subtraction.

10. A method of communicating with cryptographically encoded data within a digital telecommunications system as set forth in Claim 1 in which:
the bits of the first pseudo-random key stream are combined with said stream of data bits carrying communications information to alter the order thereof; and
the bits of the second pseudo-random key stream are combined with the received stream of cryptographically encoded data to restore the original order therof.

11. A system for communicating with cryptographically encoded data within a digital telecommunications system, comprising;
means for generating a first pseudo-random key stream of bits in accordance with an algorithm which is a function of a multi-bit digital value contained in a first register;
means for incrementing the value contained in said first register at regular periodic intervals to vary the pattern of bits in the first key stream;
means for combining the bits of the first pseudo-random key stream with a stream of data bits carrying communications information to cryptographically encode said data;
means for transmitting to said receiver at regular periodic intervals and interspersed with said transmissions of encoded data the value contained in said first register;
means for generating a second pseudo-random key stream of bits in accordance with said algorithm which is a function of a multi-bit digital value contained in a second register;
means for incrementing the value contained in said second register at the same regular periodic intervals as said first register to vary the pattern of bits in the second key stream in an identical fashion to the pattern of bits in the first key stream;
means for combining the bits of the second pseudo-random key stream with the received stream of cryptographically encoded data to decode said data into said communications information; and
means for periodically comparing the value contained in said second register with the received value of the first register to determine whether the two values correspond for corresponding moments of time and whether the first and second key streams are in synchronism with one another.

12. A system for communicating with cryptographically encoded data within a digital telecommunications system as set forth in Claim 11 which also includes:
means for resetting the value contained in said second register with the received value of the first register for a corresponding moment in time when the values have become different to resynchronize the first and second key streams eith one another.

13. A system for communicating with cryptographically encoded data within a digital telecommunications system as set forth in Claim 11 in which:
said means for transmitting to said receiver at regular periodic intervals and interspersed with said transmissions of encoded data the value contained in said first register includes means for multiplexing said encoded data transmissions and said transmissions of first register values.

14. A system for communicating with cryptographically encoded data within a digital telecommunications system as set forth in Claim 13 in which:
said first register values are transmitted on a low bit rate auxiliary channel of a digital cellular communications stream.

15. A system for communicating with cryptographically encoded data within a digital telecommunications system as set forth in Claim 14 wherein:
said low bit rate auxiliary channel is a slow associated control channel.

16. A system for communicating with cryptographically encoded data within a digital telecommunications system as set forth in Claim 14 wherein:
said first register values are combined with other low-rate data on said low bit rate auxiliary channel.

17. A system for communicating with cryptographically encoded data within a digital telecommunications system as set forth in Claim 16 which also includes:
means for temporarily interrupting transmission of said first register values when it is necessary to transmit other data on said low bit rate auxiliary channel.

18. A system for communicating with cryptographically encoded data within a digital telecommunications system as set forth in Claim 11 in which:
said means for periodically comparing the value contained in said second register with the received value of the first register to determine whether two values correspond for corresponding moments of time and whether the first and second key streams are in synchronism with one another includes means for adding to the received value of the first register an incremental value to account for a time delay in transmission.

19. A system for communicating with crytographically encoded data within a digital telecommunications system as set forth in Claim 11 in which:
the bits of the first pseudo-random key stream are combined with said stream of data bits carrying communications information by modulo-2 addition; and
the bits of the second pseudo-random key stream are combined with the received stream of cryptographically encoded data by modulo-2 subtraction.

20. A system for communicating with cryptographically encoded data within a digital telecommunications system asset forth in Claim 11 in which:
the bits of the first pseudo-random key stream are combined with said steam of databits carrying communications information to alter the order therof; and
the bits of the second pseudo-random key stream are combined with the received stream of cryptographically encoded data to restore the original order therof.

21. A method for duplex communication with cryptographically encoded data within a digital telecommunications system, comprising:
generating at a first location a first pseudo-random key stream of bits in accordance with an algorithm which is a function of a multi-bit digital value contained in a first register;
incrementing the value contained in said first register at regular periodic intervals to vary the pattern of bits in the first key stream;
combining the bits of the first pseudo-random key stream with a stream of data bits carrying communications information to be sent from said first location to a second location to cryptographically encode said data stream and with a stream of cryptoghraphically encoded data stream received from said second location;
transmitting the data stream encoded at said first location to a receiver at said second location;
transmitting to said receiver at said second location at regular periodic intervals and interspersed with said transmissions of encoded data the value contained in said first register;
generating a second pseudo-random key stream of bits in accordance with said algorithm which is a function of a multibit digital value contained in a second register;
incrementing the value contained in said second register at the same regular periodic intervals as said first register to vary the pattern of bits in the second key stream in an identical fashion to the pattern of bits in the first key stream;
combining the bits of the second pseudo-random key stream with the stream of cryptographically encoded data received at said second location to decode said data into said communications information and with a stream of data bit carrying communications information to be sent from said second location to said first location to cryptograhically encode said data stream;
transmitting the data stream encoded at the second location to a receiver at the first location
periodically comparing the value contained in said second register with the received value of the first register to determine whether the two values correspond for corresponding moments of time and whether the first and second key streams are in synchronism with one another.

22. A method for duplex communication with cryptographically encoded data within a digital telecommunications system as set forth in Claim 21 which also includes:
resetting the value contained in said second register with the received value of the first register for a corresponding moment in time when the values have become different to resynchronize the first and second key streams with one another.

23. A method for duplex communication with cryptographically encoded data within a digital telecommunications system as set forth in Claim 21 in which:
said step of transmitting to said receiver at regular periodic intervals and interspersed with said transmissions of encoded data the value contained in said first register includes multiplexing said encoded data transmissions and said transmissions of first register values.

24. A method for duplex communication with cryptographically encoded data within a digital telecommunications system as set forth in Claim 23 in which:
said first register values are transmitted on a low bit rate auxiliary channel of a digital cellular communications stream.

25. A method for duplex communication with cryptograhically encoded data within a digital telecommunications system as set forth in Claim 24 wherein:
said lowbit rate auxiliary channel is a slow associated control channel.

26. A method for duplex communication with cryptographically encoded data within a digital telecommunications system as set forth in Claim 24 wherein:
said first register values are combined with other low-rate data on said low bit rate auxiliary channel.

27. A method for duplex communication with cryptographically encoded data within a digital telecommunications system as set forth in Claim 26 in which:
transmission of said first register values are temporaily interupted when it is necessary to transmit other data on said low bit rate auxiliary channel.

28. A method for duplex communication with cryptographically encoded data within a digital telecommunications system as set forth in Claim 21 in which:
said step of periodically comparing the value contained in said second register with the received value of the first register to determine whether the two values correspond for corresponding moments of time and whether the first and second key streams are in synchronism with one another includes adding to the received value of the first register an incremental value to account for a time delay in transmission.

29. A method for duplex communication with cryptographically encoded data fwithin a digital telecommunications system as set forth in Claim 21 in which:
the bits of the first pseudo-random key stream are combined with said stream of data bits carrying communications information by modulo-2 addition; and
the bits of the second pseudo-random key stream are combined with the received stream of cryptographically encoded data by modulo-2 subtraction.

30. A system for duplex communication with cryptographically encoded data within a digital telecommunications system, comprising;
means for generating at a first location a first pseudorandom key stream of bits in accordance with an algorithm which is a function of a multi-bit digital value contained in a first register;
means for incrementing the value contained in said first register at regular periodic intervals to vary the pattern of bits in the first key stream;
means for combining the bits of the first pseudo-random key stream with a stream of data bits carrying communications information to be sent from said first location to a second location to cryptographically encode said data stream and with a stream of cryptographically encoded data stream received from said second location;
means for transmitting the data stream encoded at said first location to a receiver at said second location;
means for transmitting to said receiver at said second location at regular periodic intervals and interspersed with said transmissions of encoded data the value contained in said first register;
means for generating a second pseudo-random key stream of bits in accordance with said algorithm which is a function of a multi-bit digital value contained in a second register;
means for incrementing the value contained in said second register at the same regular periodic intervals as said first register to vary the pattern of bits in the second key stream in an identical fashion to the pattern of bits in the first key stream;
means for combining the bits of the second pseudo-random key stream with the stream of cryptographically encoded data received at said second location to decode said data into said communications information and with a stream of data bit carrying communications to be sent from said second location to said first location to cryptographically encode said data stream;
means for transmitting the data stream encoded at the second location to a receiver at the first location; and
means for periodically comparing the value contained in said second register with the received value of the first register to determine whether the two values correspond for corresponding moments of time and whether the first and second key streams are in synchronism with one another.

31. A system for duplex communication with cryptographically encoded data within a digital telecommunications system as set forth in Claim 30 which also includes:
means for resetting the value contained in said second register with the received value of the first register for a corresponding moment in time when the values have become differens to resynchronize the first and second key streams with one another.

32. A system for duplex communication with cryptographically encoded data within a digital telecommunications system as set forth in Claim 30 in which:
said step of transmitting to said receiver at regular periodic intervals and interspersed with said transmissions of encoded data the value contained in said first register includes multiplexing said encoded data transmissions and said transmissions of first register values.

33. A system for duplex communication with cryptographically encoded data within a digital telecommunications system as set forth in Claim 32 in which: said first register values are transmitted on a low bit rate auxiliary channel of a digital cellular communications stream.

34. A system for duplex communication with cryptographically encoded data within a digital telecommunications system as set forth in Claim 33 wherein:
said low bit rate auxiliary channel is a slow associated control channel.

35. A system for duplex communication with cryptographically encoded data within a digital telecommunications system as set forth in Claim 33 wherin:
said first register values are combined with other low-rate data on said low bit rate auxiliary channel.

36. A system for duplex communication with cryptograhically encoded data within a digital telecommunications system as set forth in Claim 35 in which:
transmission of said first register values are temporarily interrupted when it is necessary to transmit other data on said low bit rate auxiliary channel.

37. A system for duplex communication with cryptograhically encoded data within a digital telecommunications system as set forth in Claim 30 in which:
said step of periodically comparing the value contained in said second register with the received value of the first register to determine whether the two values correspond for corresponding moments of time and whether the first and second key streams are in synchronism with one another includes adding to the received value of the first register an incremental value to account for a time delay in transmission.

38. A system for duplex communication with cryptographically encoded data within a digital telecommunications system as set forth in Claim 30 in which:
the bits of the first pseudo-random key stream are combined with said stream of data bits carrying communications information by modulo-2 addition; and
the bits of the second pseudo-random key stream are combined with the received stream of cryptographically encoded data by modulo-2 subtraction.

39. A method of transmitting synchronizing information in the ciphered transmission of signals between a base station and a mobile station in a mobile radio system which operates in accordance with the TDMA-principle with transmission in frames and time slots, wherein control information is transmitted over a ciphered associated control channel (FACCH) and a non-ciphered associated control channel (SACCH), and wherein the base station and the mobile station each include a frame counter which counts transmitted and received frames (R1-R11,..) and which controls the formulation of a cipher sequence which is superimposed in the base station on the non-ciphered signals transmitted to the mobile station, by transmitting over the non-ciphered associated control channel (SACCH) from the base station during a given number of frames (R1-R11) an information word (W3) which denotes the sequence number (35, 46,...) for that frame for which the frame counter of the mobile shall be set at the time (t₁) at which said information word (W3) was received and which is related to the sequence number for the base-station frame counter at the time (tₒ) at which the information word (W3) was transmitted.

40. A method according to Claim 39, wherein by said information word (W3) relating to the sequence number of the mobile-station frame counter in the form of a plurality of bursts (S1-S11) is transmitted during a corresponding number of frames (R1-R11), and wherein the sequence number is the same as the sequence number of the base-station frame counter at the transmission time (tₒ) increased with the number of bursts required for transmission of the information word.

41. A method according to Claims 39, wherein said information word (W3) is followed with a further information word (W4, W5,...) which is transmitted to the mobile station for continuously monitoring of the counter setting of the frame counter in the mobile station.

## Patentansprüche

1. Verfahren zum Kommunizieren mit verschlüsselt kodierten Daten in einem digitalen Telekommunikationssystem, umfassend die folgenden Schritte:
Erzeugen einer ersten Pseudo-Zufalls-Schlüsselfolge von Bits gemäß einem Algorithmus, der eine Funktion eines Mehrfachbit-Digitalwerts ist, der in einem ersten Register enthalten ist;
Inkrementieren des in dem ersten Register enthaltenen Werts zu regelmäßigen periodischen Intervallen, um das Muster von Bits in der ersten Schlüsselfolge zu variieren;
Kombinieren der Bits der ersten Pseudo-Zufalls-Schlüsselfolge mit einer Folge von Datenbits, die Kommunikationsinformation tragen, um die Daten verschlüsselt zu kodieren;
Übertragen der kodierten Daten an einen Empfänger;
Übertragen des in dem ersten Register enthaltenen Werts an den Empfänger zu regelmäßigen periodischen Intervallen und verteilt in die Übertragungen der kodierten Daten;
Erzeugen einer zweiten Pseudo-Zufalls-Schlüsselfolge von Bits gemäß dem Algorithmus, der eine Funktion eines Mehrfachbit-Digitalwerts, der in einem zweiten Register enthalten ist;
Inkrementieren des in dem zweiten Register enthaltenen Werts zu den gleichen regelmäßigen periodischen Intervallen wie das erste Register, um das Muster von Bits in der zweiten Schlüsselfolge in einer identischen Weise wie das Muster von Bits in der ersten Schlüsselfolge zu variieren;
Kombinieren der Bits der zweiten Pseudo-Zufalls-Schlüsselfolge mit der empfangenen Folge von verschlüsselt kodierten Daten, um die Daten in die Kommunikationsinformation zu dekodieren; und
periodisches Vergleichen des in dem zweiten Register enthaltenen Werts mit dem empfangenen Wert des ersten Registers, um zu bestimmen, ob die zwei Werte für entsprechende Zeitmomente einander entsprechen und ob die ersten und zweiten Schlüsselfolgen synchron zueinander sind.

2. Verfahren zum Kommunizieren mit verschlüsselt kodierten Daten in einem digitalen Telekommunikationssystem nach Anspruch 1, welches ferner die folgenden Schritte umfaßt:
Zurücksetzen des in dem zweiten Register enthaltenen Werts mit dem empfangenen Wert des ersten Registers für einen entsprechenden Zeitmoment, wenn die Werte unterschiedlich geworden sind, um die ersten und zweiten Schlüsselfolgen erneut zueinander zu synchronisieren.

3. Verfahren zum Kommunizieren mit verschlüsselt kodierten Daten in einem digitalen Telekommunikationssystem nach Anspruch 1,
wobei der Schritt des Übertragens des in dem ersten Register enthaltenen Werts an den Empfänger zu regelmäßigen Intervallen und verteilt in die Übertragungen von kodierten Daten ein Multiplexen der Übertragungen mit kodierten Daten und der Übertragungen der Werte des ersten Registers umfaßt.

4. Verfahren zum Kommunizieren mit verschlüsselt kodierten Daten in einem digitalen Telekommunikationssystem nach Anspruch 3,
wobei die Werte des ersten Registers auf einem Hilfskanal mit niedriger Bitrate einer digitalen Zellular-Kommunikationsfolge übertragen werden.

5. Verfahren zum Kommunizieren mit verschlüsselt kodierten Daten in einem digitalen Telekommunikationssystem nach Anspruch 4,
wobei der Hilfskanal mit niedriger Bitrate ein langsamer zugeordneter Steuerkanal ist.

6. Verfahren zum Kommunizieren mit verschlüsselt kodierten Daten in einem digitalen Telekommunikationssystem nach Anspruch 4,
wobei die Werte des ersten Registers mit anderen Daten niedriger Rate auf dem Hilfskanal mit niedriger Bitrate kombiniert werden.

7. Verfahren zum Kommunizieren mit verschlüsselt kodierten Daten in einem digitalen Telekommunikationssystem nach Anspruch 6,
wobei eine Übertragung der Werte des ersten Registers vorübergehend unterbrochen wird, wenn es erforderlich ist, andere Daten auf dem Hilfskanal mit niedriger Bitrate zu übertragen.

8. Verfahren zum Kommunizieren mit verschlüsselt kodierten Daten in einem digitalen Telekommunikationssystem nach Anspruch 1,
wobei der Schritt des periodischen Vergleichens des in dem zweiten Register enthaltenen Werts mit dem empfangenen Wert des ersten Registers, um zu bestimmen, ob die beiden Werte für entsprechende Zeitmomente einander entsprechen und ob die ersten und zweiten Schlüsselfolgen synchron zueinander sind, ein Addieren eines Inkrementwerts zu dem empfangenen Wert des ersten Registers umfaßt, um eine Zeitverzögerung bei einer Übertragung zu berücksichtigen.

9. Verfahren zum Kommunizieren mit verschlüsselt kodierten Daten in einem digitalen Telekommunikationssystem nach Anspruch 1,
wobei die Bits der ersten Pseudo-Zufalls-Schlüsselfolge mit der Folge von Datenbits, die Kommunikationsinformation tragen, mittels einer Modulo-2-Addition kombiniert werden; und
die Bits der zweiten Pseudo-Zufalls-Schlüsselfolgen mit der empfangenen Folge von verschlüsselt kodierten Daten mittels einer Modulo-2-Subtraktion kombiniert werden.

10. Verfahren zum Kommunizieren mit verschlüsselt kodierten Daten in einem digitalen Telekommunikationssystem nach Anspruch 1,
wobei die Bits der ersten Pseudo-Zufalls-Schlüsselfolge mit der Folge von Datenbits, die Kommunikationsinformation tragen, kombiniert werden, um die Ordnung davon zu verändern; und
die Bits der zweiten Pseudo-Zufalls-Schlüsselfolge mit der empfangenen Folge von verschlüsselt kodierten Daten kombiniert werden, um die ursprüngliche Ordnung davon wiederherzustellen.

11. System zum Kommunizieren mit verschlüsselt kodierten Daten in einem digitalen Telekommunikationssystem, umfassend:
eine Einrichtung zum Erzeugen einer ersten Pseudo-Zufalls-Schlüssel folge von Bits gemäß einem Algorithmus, welcher eine Funktion eines Mehrfachbit-Digitalwerts ist, der in einem ersten Register enthalten ist;
eine Einrichtung zum Inkrementieren des in dem ersten Register enthaltenen Werts zu regelmäßigen periodischen Intervallen, um das Muster von Bits in der ersten Schlüsselfolge zu variieren;
eine Einrichtung zum Kombinieren der Bits der ersten Pseudo-Zufalls-Schlüsselfolge mit einer Folge von Datenbits, die Kommunikationsinformation tragen, um diese daten verschlüsselt zu kodieren;
eine Einrichtung zum Übertragen des in dem ersten Register enthaltenen Werts an den Empfänger zu regelmäßigen periodischen Intervallen und verteilt in die Übertragungen von kodierten Daten;
eine Einrichtung zum Erzeugen einer zweiten Pseudo-Zufalls-Schlüssel folge von Bits gemäß dem Algorithmus, welcher eine Funktion eines Mehrfachbit-Digitalwerts, der in einem zweiten Register enthalten ist;
eine Einrichtung zum Inkrementieren des in dem zweiten Register enthaltenen Werts zu den gleichen regelmäßigen periodischen Intervallen wie das erste Register, um das Muster von Bits in der zweiten Schlüsselfolge in einer identischen Weise wie das Muster von Bits in der ersten Schlüsselfolge zu variieren;
eine Einrichtung zum Kombinieren der Bits der zweiten Pseudo-Zufalls-Schlüsselfolge mit der empfangenen Folge von verschlüsselt kodierten Daten, um die Daten in die Kommunikationsinformation zu dekodieren; und
eine Einrichtung zum periodischen Vergleichen des in dem zweiten Register enthaltenen Werts mit dem empfangenen Wert des ersten Registers, um zu bestimmen, ob die beiden Werte für entsprechende Zeitmomente einander entsprechen und ob die ersten und zweiten Schlüsselfolgen synchron zueinander sind.

12. System zum Kommunizieren mit verschlüsselt kodierten Daten in einem digitalen Telekommunikationssystem nach Anspruch 11, das ferner umfaßt:
eine Einrichtung zum Zurücksetzen des in dem zweiten Register enthaltenen Werts mit dem empfangenen Wert des ersten Registers für einen entsprechenden Zeitmoment, wenn die Werte unterschiedlich geworden sind, um die ersten und zweiten Schlüsselfolgen erneut zueinander zu synchronisieren.

13. System zum Kommunizieren mit verschlüsselt kodierten Daten in einem digitalen Telekommunikationssystem nach Anspruch 11,
wobei die Einrichtung zum Übertragen des in dem ersten Register enthaltenen Werts an den Empfänger zu regelmäßigen periodischen Intervallen und verteilt in die Übertragungen von kodierten Daten eine Einrichtung umfaßt, um die Übertragungen mit kodierten Daten und die Übertragungen der Werte des ersten Registers zu multiplexieren.

14. System zum Kommunizieren mit verschlüsselt kodierten Daten in einem digitalen Telekommunikationssystem nach Anspruch 13,
wobei die Werte des ersten Registers auf einem Hilfskanal mit niedriger Bitrate einer digitalen Zellular-Kommunikationsfolge übertragen werden.

15. System zum Kommunizieren mit verschlüsselt kodierten Daten in einem digitalen Telekommunikationssystem nach Anspruch 14,
wobei der Hilfskanal mit niedriger Bitrate ein langsamer zugeordneter Steuerkanal ist.

16. System zum Kommunizieren mit verschlüsselt kodierten Daten in einem digitalen Telekommunikationssystem nach Anspruch 14,
wobei die Werte des ersten Registers mit anderen Daten niedriger Rate auf dem Hilfskanal mit niedriger Bitrate kombiniert werden.

17. System zum Kommunizieren mit verschlüsselt kodierten Daten in einem digitalen Telekommunikationssystem nach Anspruch 16, welches ferner umfaßt:
eine Einrichtung zum vorübergehenden Unterbrechen einer Übertragung der Wert des ersten Registers, wenn es erforderlich ist, andere Daten auf dem Hilfskanal mit niedriger Bitrate zu übertragen.

18. System zum Kommunizieren mit verschlüsselt kodierten Daten in einem digitalen Telekommunikationssystem nach Anspruch 11, wobei die Einrichtung zum periodischen Vergleichen des in dem zweiten Register enthaltenen Werts mit dem empfangenen Wert des ersten Registers, um zu bestimmen, ob die beiden Werte für entsprechende Zeitmomente einander entsprechen und ob die ersten und zweiten Schlüsselfolgen synchron zueinander sind, eine Einrichtung umfaßt, um einen Inkrementalwert zu dem empfangenen Wert des ersten Registers zu addieren, um eine Zeitverzögerung bei einer Übertragung zu berücksichtigen.

19. System zum Kommunizieren mit verschlüsselt kodierten Daten in einem digitalen Telekommunikationssystem nach Anspruch 11, wobei:
die Bits der ersten Pseudo-Zufalls-Schlüsselfolge mit der Folge von Datenbits, die Kommunikationsinformation tragen, mittels einer Modulo-2-Addition kombiniert werden; und
die Bits der zweiten Pseudo-Zufalls-Schlüsselfolge mit der empfangenen Folge von verschlüsselt kodierten Daten mittels einer Modulo-2-Subtraktion kombiniert werden.

20. System zum Kommunizieren mit verschlüsselt kodierten Daten in einem digitalen Telekommunikationssystem nach Anspruch 11, wobei:
die Bits der ersten Pseudo-Zufalls-Schlüsselfolge mit der Folge von Datenbits, die Kommunikationsinformation tragen, kombiniert werden, um die Ordnung davon zu verändern; und
die Bits der zweiten Pseudo-Zufalls-Schlüsselfolge mit der empfangenen Folge von verschlüsselt kodierten Daten kombiniert werden, um die ursprüngliche Reihenfolge davon zurückzugewinnen.

21. Verfahren zur Duplex-Kommunikation mit verschlüsselt kodierten Daten in einem digitalen Telekommunkationssystem, umfassend:
Erzeugen einer ersten Pseudo-Zufalls-Schlüsselfolge von Bits an einer ersten Stelle entsprechend einem Algorithmus, welcher eine Funktion eines Mehrfachbit-Digitalwerts ist, der in einem ersten Register enthalten ist;
Inkrementieren des in dem ersten Register enthaltenen Werts zu regelmäßigen periodischen Intervallen, um das Muster von Bits in der ersten Schlüsselfolge zu verändern;
Kombinieren der Bits der ersten Pseudo-Zufalls-Schlüsselfolge mit einer Folge von Datenbits, die Kommunikationsinformation tragen, die von der ersten Stelle an eine zweite Stelle gesendet werden sollen, um die Datenfolge verschlüsselt zu kodieren und mit einer Folge einer verschlüsselt kodierten Datenfolge, die von der zweiten Stelle empfangen wird;
Übertragen der an der ersten Stelle kodierten Datenfolge an einen Empfänger an der zweiten Stelle;
Übertragen des in dem ersten Register enthaltenen Werts an dem Empfänger an der zweiten Stelle zu regelmäßigen periodischen Intervallen und verteilt in die Übertragungen der kodierten Daten;
Erzeugen einer zweiten Pseudo-Zufalls-Schlüsselfolge von Bits gemäß dem Algorithmus, welcher eine Funktion eines Mehrfachbit-Digitalwerts ist, der in einem zweiten Register enthalten ist;
Inkrementieren des in dem zweiten Register enthaltenen Werts zu den gleichen regelmäßigen periodischen Intervallen wie das erste Register, um das Muster von Bits in der zweiten Schlüsselfolge in einer identische Weise wie das Muster von Bits in der ersten Schlüsselfolge zu variieren;
Kombinieren der Bits der zweiten Pseudo-Zufalls-Schlüsselfolge mit der Folge von verschlüsselt kodierten Daten, die an der zweiten Stelle empfangen werden, um die Daten in die Kommunikationsinformation zu dekodieren und mit einer Folge von Datenbits, welche Kommunikationsinformation trägt, die von der zweiten Stelle an die erste Stelle gesendet werden soll, um die Datenfolge verschlüsselt zu kodieren;
Übertragen der an der zweiten Stelle kodierten Datenfolge an einen Empfänger an der ersten Stelle; und
periodisches Vergleichen des in dem zweiten Register enthaltenen Werts mit dem empfangenen Wert des ersten Registers, um zu bestimmen, ob die zwei Werte für entsprechende Zeitmomente einander entsprechen und ob die ersten und zweiten Schlüsselfolgen synchron zueinander sind.

22. Verfahren zur Duplex-Kommunikation mit verschlüsselt kodierten Daten in einem digitalen Telekommunikationssystem nach Anspruch 21, welches ferner den folgenden Schritt umfaßt:
Zurücksetzen des in dem zweiten Register enthaltenen Werts mit dem empfangenen Wert des ersten Registers für einen entsprechenden Zeitmoment, wenn die Werte unterschiedlich geworden sind, um die ersten und zweiten Schlüsselfolgen erneut zueinander zu synchronisieren.

23. Verfahren zur Duplex-Kommunikation mit verschlüsselugnsmäßig kodierten Daten in einem digitalen Telekommunikationssystem nach Anspruch 21, wobei:
der Schritt der Übertragung des in dem ersten Register enthaltenen Werts an den Empfänger zu regelmäßigen periodischen Intervallen und verteilt in die Übertragungen der kodierten Daten ein Multiplexen der Übertragungen der kodierten Daten und der Übertragungen der Werte des ersten Registers umfaßt.

24. Verfahren zur Duplex-Kommunikation mit verschlüsselt kodierten Daten in einem digitalen Telekommunikationssystem nach Anspruch 23, wobei:
die Werte des ersten Registers auf einem Hilfskanal mit niedriger Bitrate einer digitalen Zellular-Kommunikationsfolge übertragen werden.

25. Verfahren zur Duplex-Kommunikation mit verschlüsselt kodierten Daten in einem digitalen Telekommunikationssystem nach Anspruch 24, wobei:
der Hilfgskanal mit niedriger Bitrate ein langsamer zugeordneter Steuerkanal ist.

26. Verfahren zur Duplex-Kommunikation mit verschlüsselt kodierten Daten in einem digitalen Telekommunikationssystem nach Anspruch 24, wobei:
die Werte des ersten Registers mit anderen Daten niedriger Rate auf dem Hilfskanal mit niedriger Bitrate kombiniert werden.

27. Verfahren zur Duplex-Kommunikation mit verschlüsselt kodierten Daten in einem digitalen Telekommunikationssystem nach Anspruch 26, wobei:
eine Übertragung der Werte des ersten Registers vorübergehend unterbrochen, wenn es erforderlich ist, andere Daten auf dem Hilfskanal mit niedriger Bitrate zu übertragen.

28. Verfahren zur Duplex-Kommunikation mit verschlüsselt kodierten Daten in einem digitalen Telekommunikationssystem nach Anspruch 21, wobei der Schritt des periodischen Vergleichens des in dem zweiten Register enthaltenen Werts mit dem empfangenen Wert des ersten Registers, um zu bestimmen, ob die zwei Werte für entsprechende Zeitmomente einander entsprechen und ob die ersten und zweiten Schlüsselfolgen synchron zueinander sind, ein Addieren eines Inkrementwerts zu dem empfangenen Wert des ersten Registers umfaßt, um eine Zeitverzögerung bei einer Übertragung zu berücksichtigen.

29. Verfahren zur Duplex-Kommunikation mit verschlüsselt kodierten Daten in einem digitalen Telekommunikationssystem nach Anspruch 21, wobei:
die Bits der ersten Pseudo-Zufalls-Schlüsselfolge mit der Folge von Datenbits, die Kommunikationsinformation tragen, mittels einer Modulo-2-Addition kombiniert werden; und
die Bits der zweiten Pseudo-Zufalls-Schlüsselfolge mit der empfangenen Folge von verschlüsselt kodierten Daten mittels einer Modulo-2-Subtraktion kombiniert werden.

30. System zur Duplex-Kommunikation mit verschlüsselt kodierten Daten in einem digitalen Telekommunikationssystem, umfassend:
eine Einrichtung zur Erzeugung einer ersten Pseudo-Zufalls-Schlüsselfolge von Bits an einer ersten Stelle gemäß einem Algorithmus, der eine Funktion eines Mehrfachbit-Digitalwerts ist, der in einem ersten Register enthalten ist;
eine Einrichtung zum Inkrementieren des in dem ersten Register enthaltenen Werts bei regelmäßigen periodischen Intervallen, um das Muster von Bits in der ersten Schlüsselfolge zu variieren;
eine Einrichtung zum Kombinieren der Bits der ersten Pseudo-Zufalls-Schlüsselfolge mit einer Folge von Datenbits, die Kommunikationsinformation tragen, die von der ersten Stelle an eine zweite Stelle gesendet werden sollen, um die Datenfolge verschlüsselt zu kodieren und mit einer Folge einer verschlüsselt kodierten Datenfolge, die von der zweiten Stelle empfangen wird;
eine Einrichtung zum Übertragen der an der ersten Stelle kodierten Datenfolge an einen Empfänger an der zweiten Stelle;
eine Einrichtung zum Übertragen des in dem ersten Register enthaltenen Werts an den Empfänger an der zweiten Stelle bei regelmäßigen periodischen Intervallen und verteilt in die Übertragungen der kodierten Daten;
eine Einrichtung zur Erzeugung einer zweiten Pseudo-Zufalls-Schlüsselfolge von Bits gemäß dem Algorithmus, der eine Funktion eines Mehrfachbit-Digitalwerts ist, der in einem zweiten Register enthalten ist;
eine Einrichtung zum Inkrementieren des in dem zweiten Register enthaltenen Werts bei den gleichen regelmäßigen periodischen Intervallen wie das erste Register, um das Muster von Bits in der zweiten Schlüsselfolge in einer identischen Weise wie das Muster von Bits in der ersten Schlüsselfolge zu variieren;
eine Einrichtung zum Kombinieren der Bits der zweiten Pseudo-Zufalls-Schlüsselfolge mit der Folge von verschlüsselt kodierten Daten, die an der zweiten Stelle empfangen wird, um die Daten in die Kommunikationsinformation zu dekodieren und mit einer Folge von Datenbit-tragenden Kommunikationen, die von der zweiten Stelle an die erste Stelle gesendet werden soll, um die Datenfolge verschlüsselt zu kodieren;
eine Einrichtung zum Übertragen der an der zweiten Stelle kodierten Datenfolge an einen Empfänger an der ersten Stelle; und
eine Einrichtung zum periodischen Vergleichen des in dem zweiten Register enthaltenen Werts mit dem empfangenen Wert des ersten Registers, um zu bestimmen, ob die zwei Werte für entsprechende Zeitmomente einander entsprechen und ob die ersten und zweiten Schlüsselfolgen synchron zueinander sind.

31. System zur Duplex-Kommunikation mit verschlüsselt kodierten Daten in einem digitalen Telekommunikationssystem nach Anspruch 30, das ferner umfaßt:
eine Einrichtung zum Zurücksetzen des in dem zweiten Register enthaltenen Werts mit dem empfangenen Wert des ersten Registers für einen entsprechenden Zeitmoment, wenn die Werte unterschiedlich geworden sind, um die ersten und zweiten Schlüsselfolgen erneut zueinander zu synchronisieren.

32. System zur Duplex-Kommunikation mit verschlüsselt kodierten Daten in einem digitalen Telekommunikationssystem nach Anspruch 30, wobei:
der Schritt des Übertragens des in dem ersten Register enthaltenen Werts an den Empfänger zu regelmäßigen periodischen Intervallen und verteilt in die Übertragungen von kodierten Daten ein Multiplexen der Übertragungen mit kodierten Daten und der Übertragungen der Werte des ersten Registers umfaßt.

33. System zur Duplex-Kommunikation mit verschlüsselt kodierten Daten in einem digitalen Telekommunikationssystem nach Anspruch 32, wobei:
die Werte des ersten Registers auf einem Hilfskanal mit niedriger Bitrate einer digitalen Zellular-Kommunikationsfolge übertragen werden.

34. System zur Duplex-Kommunikation mit verschlüsselt kodierten Daten in einem digitalen Telekommunikationssystem nach Anspruch 33, wobei:
der Hilfskanal mit niedriger Bitrate ein langsamer zugeordneter Steuerkanal ist.

35. System zur Duplex-Kommunikation mit verschlüsselt kodierten Daten in einem digitalen Telekommunikationssystem nach Anspruch 33, wobei:
die Werte des ersten Registers mit anderen Daten niedriger Rate auf dem Hilfskanal mit niedriger Bitrate kombiniert werden.

36. System zur Duplex-Kommunikation mit verschlüsselt kodierten Daten in einem digitalen Telekommunikationssystem nach Anspruch 35, wobei:
eine Übertragung der Werte des ersten Registers vorübergehend unterbrochen wird, wenn es erforderlich ist, andere Daten auf dem Hilfskanal mit niedriger Bitrate zu übertragen.

37. System zur Duplex-Kommunikation mit verschlüsselt kodierten Daten in einem digitalen Telekommunikationssystem nach Anspruch 30, wobei:
der Schritt zum periodischen Vergleichen des in dem zweiten Register enthaltenen Werts dem empfangenen Wert des ersten Registers, um zu bestimmen, ob die zwei Werte für entsprechende Zeitmomente einander entsprechen, und ob die ersten und zweiten Schlüsselfolgen synchron zueinander sind, ein Addieren eines Inkrementalwerts zu dem empfangenen Wert des ersten Registers umfaßt, um eine Zeitverzögerung bei einem der Übertragung zu berücksichtigen.

38. System zur Duplex-Kommunikation mit verschlüsselt kodierten Daten in einem digitalen Telekommunikationssystem nach Anspruch 30, wobei:
die Bits der ersten Pseudo-Zufalls-Schlüsselfolge mit der Folge von Datenbits, die Kommunikationsinformation tragen, mittels einer Modulo-2-Addition kombiniert werden; und
die Bits der zweiten Pseudo-Zufalls-Schlüsselfolge mit der empfangenen Folge von verschlüsselt kodierten Daten mittels einer Modulu-2-Subtraktion kombiniert werden.

39. Verfahren zum Übertragen von Synchronisationsinformation in der verschlüsselten Übertragung von Signalen zwischen einer Basisstation und einer mobilen Station in einem Mobilfunksystem, welches gemäß dem TDMA-Prinzip mit einer Übertragung in Rahmen und Zeitschlitzen arbeitet, wobei Steuerinformation über einen verschlüsselten zugeordneten Steuerkanal (FACCH) und einen nicht-verschlüsselten zugeordneten Steuerkanal (SACCH) übertragen wird, und wobei die Basisstation und die mobile Station jeweils einen Rahmenzähler umfassen, der übertragene und empfangene Rahmen (R1-R11, ...) zählt und der die Bildung einer Verschlüsselungssequenz steuert, die in der Basisstation auf die nicht-verschlüsselten Signale, die an die mobile Station gesendet werden, überlagert, indem über den nicht-verschlüsselten zugeordneten Steuerkanal (SACCH) von der Basisstation während einer gegebenen Anzahl von Rahmen (R1-R11) ein Informationswort (W3) übertragen wird, welches die Sequenznummer (35,46, ...) für denjenigen Rahmen anzeigt, für den der Rahmenzähler der mobilen Station auf die Zeit (t₁) gesetzt werden soll, zu der das Informationswort (W3) empfangen wurde und die sich auf die Sequenznummer für den Rahmenzähler der Basisstation zu der Zeit (tₒ) bezieht, zu der das Informationswort (W3) übertragen wurde.

40. Verfahren nach Anspruch 39, wobei durch das Informationswort (W3), welches sich auf die Sequenznummer des Rahmenzählers der mobilen Station in der Form einer Vielzahl von Bursts (S1-S11) bezieht, während einer entsprechenden Anzahl von Rahmen (R1-R11) übertragen wird, und wobei die Sequenznummer die gleiche wie die Sequenznummer des Rahmenzählers der Basisstation zu der Übertragungszeit (tₒ) ist, die um die Anzahl von Bursts erhöht ist, die zur Übertragung des Informationsworts benötigt wird.

41. Verfahren nach Anspruch 39, wobei dem Informationswort (W3) ein weiteres Informationswort (W4,W5, ...) folgt, welches an die mobile Station gesendet wird, um kontinuierlich die Zählereinstellung des Rahmenzählers in der mobilen Station zu überwachen.

## Revendications

1. Un procédé de communication avec des données codées de façon cryptographique dans un système de télécommunication numérique, comprenant :
la génération d'un premier train de bits de clé pseudo-aléatoire conformément à un algorithme qui est fonction d'une valeur numérique à plusieurs bits contenue dans un premier registre;
l'incrémentation de la valeur contenue dans le premier registre, à des intervalles périodiques réguliers, pour faire varier la configuration de bits dans le premier train de clé;
la combinaison des bits du premier train de clé pseudo-aléatoire avec un train de bits de données acheminant une information de télécommunication, pour coder ces données de façon cryptographique;
l'émission des données codées vers un récepteur;
l'émission vers le récepteur de la valeur contenue dans le premier registre, à des intervalles périodiques réguliers et de manière dispersée dans les émissions de données codées;
la génération d'un second train de bits de clé pseudo-aléatoire, conformément à l'algorithme qui est fonction d'une valeur numérique à plusieurs bits contenue dans un second registre;
l'incrémentation de la valeur contenue dans le second registre, aux mêmes intervalles périodiques réguliers que pour le premier registre, pour faire varier la configuration de bits dans le second train de clé d'une manière identique à la configuration de bits dans le premier train de clé;
la combinaison des bits du second train de clé pseudo-aléatoire avec le train reçu de données codées de façon cryptographique, pour décoder ces données de façon à fournir l'information de télécommunication; et
la comparaison périodique de la valeur contenue dans le second registre avec la valeur reçue du premier registre, pour déterminer si les deux valeurs correspondent pour des instants correspondants, et si les premier et second trains de clé sont en synchronisme mutuel.

2. Un procédé de communication avec des données codées de façon cryptographique dans un système de télécommunication numérique selon la revendication 1, comprenant également :
la restauration de la valeur contenue dans le second registre avec la valeur reçue du premier registre pour un instant correspondant, lorsque les deux valeurs sont devenues différentes, pour resynchroniser mutuellement les premier et second trains de clé.

3. Un procédé de communication avec des données codées de façon cryptographique dans un système de télécommunication numérique selon la revendication 1, dans lequel :
l'étape d'émission vers le récepteur, à des intervalles périodiques réguliers, de la valeur contenue dans le premier registre, d'une manière dispersée parmi les émissions de données codées, comprend le multiplexage des émissions de données codées et des émissions des valeurs du premier registre.

4. Un procédé de communication avec des données codées de façon cryptographique dans un système de télécommunication numérique selon la revendication 3, dans lequel :
les valeurs du premier registre sont émises sur un canal auxiliaire à faible débit binaire d'un train de télécommunication cellulaire numérique.

5. Un procédé de communication avec des données codées de façon cryptographique dans un système de télécommunication numérique selon la revendication 4, dans lequel :
le canal auxiliaire à faible débit binaire est un canal de commande associé lent.

6. Un procédé de communication avec des données codées de façon cryptographique dans un système de télécommunication numérique selon la revendication 4, dans lequel :
les valeurs du premier registre sont combinées avec d'autres données à faible débit sur le canal auxiliaire à faible débit binaire.

7. Un procédé de communication avec des données codées de façon cryptographique dans un système de télécommunication numérique selon la revendication 6, dans lequel :
l'émission des valeurs du premier registre est temporairement interrompue lorsqu'il est nécessaire d'émettre d'autres données sur le canal auxiliaire à faible débit binaire.

8. Un procédé de communication avec des données codées de façon cryptographique dans un système de télécommunication numérique selon la revendication 1, dans lequel :
l'étape de comparaison périodique de la valeur contenue dans le second registre avec la valeur reçue du premier registre, pour déterminer si les deux valeurs correspondent pour des instants correspondants, et si les premier et second trains de clé sont en synchronisme mutuel, comprend l'addition d'une valeur incrémentielle à la valeur reçue du premier registre, pour tenir compte d'un retard de transmission.

9. Un procédé de communication avec des données codées de façon cryptographique dans un système de télécommunication numérique selon la revendication 1, dans lequel :
les bits du premier train de clé pseudo-aléatoire sont combinés avec le train de bits de données acheminant l'information de télécommunication par addition modulo 2; et
les bits du second train de clé pseudo-aléatoire sont combinés avec le train reçu de données codées de façon cryptographique, par soustraction modulo 2.

10. Un procédé de communication avec des données codées de façon cryptographique dans un système de télécommunication numérique selon la revendication 1, dans lequel :
les bits du premier train de clé pseudo-aléatoire sont combinés avec le train de bits de données acheminant l'information de télécommunication, pour modifier leur ordre; et
les bits du second train de clé pseudo-aléatoire sont combinés avec le train reçu de données codées de façon cryptographique, pour rétablir leur ordre d'origine.

11. Un système pour communiquer avec des données codées de façon cryptographique dans un système de télecommunication numérique, comprenant :
des moyens pour générer un premier train de bits de clé pseudo-aléatoire, conformément à un algorithme qui est fonction d'une valeur numérique à plusieurs bits contenue dans un premier registre;
des moyens pour incrémenter la valeur contenue dans le premier registre, à des intervalles périodiques réguliers, pour faire varier la configuration de bits dans le premier train de clé;
des moyens pour combiner les bits du premier train de clé pseudo-aléatoire avec un train de bits de données acheminant une information de télécommunication, pour coder ces données de façon cryptographique;
des moyens pour émettre vers le récepteur, à des intervalles périodiques réguliers, la valeur contenue dans le premier registre, d'une manière dispersée parmi les émissions de données codées;
des moyens pour générer un second train de bits de clé pseudo-aléatoire conformément à l'algorithme précité qui est fonction d'une valeur numérique à plusieurs bits contenue dans un second registre;
des moyens pour incrémenter la valeur contenue dans le second registre aux mêmes intervalles périodiques réguliers que pour le premier registre, pour faire varier la configuration de bits dans le second train de clé d'une manière identique à la configuration de bits dans le premier train de clé;
des moyens pour combiner les bits du second train de clé pseudo-aléatoire avec le train reçu de données codées de façon cryptographique, pour décoder ces données de façon à fournir l'information de télécommunication; et
des moyens pour comparer périodiquement la valeur contenue dans le second registre avec la valeur reçue du premier registre, pour déterminer si les deux valeurs correspondent pour des instants correspondants et si les premier et second trains de clé sont en synchronisme mutuel.

12. Un système pour communiquer avec des données codées de façon cryptographique dans un système de télécommunication numérique selon la revendication 11, comprenant également :
des moyens pour restaurer la valeur contenue dans le second registre avec la valeur reçue du premier registre pour un instant correspondant, lorsque les valeurs sont devenues différentes, pour resynchroniser mutuellement les premier et second trains de clé.

13. Un système pour communiquer avec des données codées de façon cryptographique dans un système de télécommunication numérique selon la revendication 11, dans lequel :
les moyens pour émettre vers le récepteur, à des intervalles périodiques réguliers, la valeur contenue dans le premier registre, d'une manière dispersée parmi les émissions de données codées, comprennent des moyens pour multiplexer les émissions de données codées et les émissions des valeurs du premier registre.

14. Un système pour communiquer avec des données codées de façon cryptographique dans un système de télécommunication numérique selon la revendication 13, dans lequel :
les valeurs du premier registre sont émises sur un canal auxiliaire à faible débit binaire d'un train de télécommunication cellulaire numérique.

15. Un système pour communiquer avec des données codées de façon cryptographique dans un système de télécommunication numérique selon la revendication 14, dans lequel :
le canal auxiliaire à faible débit binaire est un canal de commande associé lent.

16. Un système pour communiquer avec des données codées de façon cryptographique dans un système de télécommunication numérique selon la revendication 14, dans lequel :
les valeurs du premier registre sont combinées avec d'autres données à faible débit sur le canal auxiliaire à faible débit binaire.

17. Un système pour communiquer avec des données codées de façon cryptographique dans un système de télécommunication numérique selon la revendication 16, comprenant également :
des moyens pour interrompre temporairement l'émission des valeurs du premier registre lorsqu'il est nécessaire d'émettre d'autres données sur le canal auxiliaire à faible débit binaire.

18. Un système pour communiquer avec des données codées de façon cryptographique dans un système de télécommunication numérique selon la revendication 11, dans lequel :
les moyens pour comparer périodiquement la valeur contenue dans le second registre avec la valeur reçue du premier registre, pour déterminer si les deux valeurs correspondent pour des instants correspondants, et si les premier et second trains de clé sont en synchronisme mutuel, comprennent des moyens pour additionner une valeur incrémentielle à la valeur reçue du premier registre, pour tenir compte d'un retard de transmission.

19. Un système pour communiquer avec des données codées de façon cryptographique dans un système de télécommunication numérique selon la revendication 11, dans lequel :
les bits du premier train de clé pseudo-aléatoire sont combinés avec le train de bits de données acheminant l'information de télécommunication par addition modulo 2; et
les bits du second train de clé pseudo-aléatoire sont combinés avec le train reçu de données codées de façon cryptographique, par soustraction modulo 2.

20. Un système pour communiquer avec des données codées de façon cryptographique dans un système de télécommunication numérique selon la revendication 11, dans lequel :
les bits du premier train de clé pseudo-aléatoire sont combinés avec le train de bits de données acheminant l'information de télécommunication, pour modifier leur ordre; et
les bits du second train de clé pseudo-aléatoire sont combinés avec le train reçu de données codées de façon cryptographique, pour rétablir leur ordre d'origine.

21. Un procédé pour la communication en duplex avec des données codées de façon cryptographique dans un système de télécommunication numérique, comprenant :
la génération à un premier emplacement d'un premier train de bits de clé pseudo-aléatoire conformément à un algorithme qui est fonction d'une valeur numérique à plusieurs bits contenue dans un premier registre;
l'incrémentation de la valeur contenue dans le premier registre à des intervalles périodiques réguliers, pour faire varier la configuration de bits dans le premier train de clé;
la combinaison des bits du premier train de clé pseudo-aléatoire avec un train de bits de données acheminant une information de télécommunication à émettre du premier emplacement vers un second emplacement, pour coder de façon cryptographique le train de données, et avec un train de données codées de façon cryptographique qui est reçu à partir du second emplacement;
l'émission du train de données codées au premier emplacement vers un récepteur se trouvant au second emplacement;
l'émission vers le récepteur au second emplacement, à des intervalles périodiques réguliers, de la valeur contenue dans le premier registre, d'une manière dispersée parmi des émissions de données codées;
la génération d'un second train de bits de clé pseudo-aléatoire conformément à l'algorithme précité qui est fonction d'une valeur numérique à plusieurs bits contenue dans un second registre;
l'incrémentation de la valeur contenue dans le second registre aux mêmes intervalles périodiques réguliers que pour le premier registre, pour faire varier la configuration de bits dans le second train de clé d'une manière identique à la configuration de bits dans le premier train de clé;
la combinaison des bits du second train de clé pseudo-aléatoire avec le train de données codées de façon cryptographique qui est reçu au second emplacement, pour décoder ces données de façon à fournir l'information de télécommunication, et avec un train de bits de données acheminant l'information de télécommunication à émettre du second emplacement vers le premier emplacement, pour coder le train de données de façon cryptographique;
l'émission du train de données codé au second emplacement vers un récepteur se trouvant au premier emplacement; et la comparaison périodique de la valeur contenue dans le second registre avec la valeur reçue du premier registre, pour déterminer si les deux valeurs correspondent pour des instants correspondants et si les premier et second trains de clé sont en synchronisme mutuel.

22. Un procédé pour la communication en duplex avec des données codées de façon cryptographique dans un système de télécommunication numérique selon la revendication 21, comprenant également :
la restauration de la valeur contenue dans le second registre avec la valeur reçue du premier registre pour un instant correspondant, lorsque les valeurs sont devenues différentes, pour resynchroniser mutuellement les premier et second trains de clé.

23. Un procédé pour la communication en duplex avec des données codées de façon cryptographique dans un système de télécommunication numérique selon la revendication 21, dans lequel :
l'étape d'émission vers le récepteur, à des intervalles périodiques réguliers, de la valeur contenue dans le premier registre, d'une manière dispersée parmi les émissions de données codées, comprend le multiplexage des émissions de données codées et des émissions des valeurs du premier registre.

24. Un procédé pour la communication en duplex avec des données codées de façon cryptographique dans un système de télécommunication numérique selon la revendication 23, dans lequel :
les valeurs du premier registre sont émises sur un canal auxiliaire à faible débit binaire d'un train de télécommunication cellulaire numérique.

25. Un procédé pour la communication en duplex avec des données codées de façon cryptographique dans un système de télécommunication numérique selon la revendication 24, dans lequel :
le canal auxiliaire à faible débit binaire est un canal de commande associé lent.

26. Un procédé pour la communication en duplex avec des données codées de façon cryptographique dans un système de télécommunication numérique selon la revendication 24, dans lequel :
les valeurs du premier registre sont combinées avec d'autres données à faible débit sur le canal auxiliaire à faible débit binaire.

27. Un procédé pour la communication en duplex avec des données codées de façon cryptographique dans un système de télécommunication numérique selon la revendication 26, dans lequel :
l'émission des valeurs du premier registre est temporairement interrompue lorsqu'il est nécessaire d'émettre d'autres données sur le canal auxiliaire à faible débit binaire.

28. Un procédé pour la communication en duplex avec des données codées de façon cryptographique dans un système de télécommunication numérique selon la revendication 21, dans lequel :
l'étape de comparaison périodique de la valeur contenue dans le second registre avec la valeur reçue du premier registre, pour déterminer si les deux valeurs correspondent pour des instants correspondants, et si les premier et second trains de clé sont en synchronisme mutuel, comprend l'addition d'une valeur incrémentielle à la valeur reçue du premier registre, pour tenir compte d'un retard de transmission.

29. Un procédé pour la communication en duplex avec des données codées de façon cryptographique dans un système de télécommunication numérique selon la revendication 21, dans lequel :
les bits du premier train de clé pseudo-aléatoire sont combinés avec le train de bits de données acheminant l'information de télécommunication par addition modulo 2; et
les bits du second train de clé pseudo-aléatoire sont combinés avec le train reçu de données codées de façon cryptographique, par soustraction modulo 2.

30. Un système pour la communication en duplex avec des données codées de façon cryptographique dans un système de télécommunication numérique, comprenant :
des moyens pour générer à un premier emplacement un premier train de bits pseudo-aléatoire conformément à un algorithme qui est fonction d'une valeur numérique à plusieurs bits contenue dans un premier registre;
des moyens pour incrémenter la valeur contenue dans le premier registre, à des intervalles périodiques réguliers, pour faire varier la configuration de bits dans le premier train de clé;
des moyens pour combiner les bits du premier train de clé pseudo-aléatoire avec un train de bits de données acheminant une information de télécommunication à émettre du premier emplacement vers un second emplacement, pour coder de façon cryptographique le train de données, et avec un train de données codées de façon cryptographique qui est reçu à partir du second emplacement;
des moyens pour émettre le train de données codées au premier emplacement vers un récepteur se trouvant au second emplacement;
des moyens pour émettre vers le récepteur au second emplacement, à des intervalles périodiques réguliers, la valeur contenue dans le premier registre, d'une manière dispersée parmi des émissions de données codées;
des moyens pour générer un second train de bits de clé pseudo-aléatoire conformément à l'algorithme qui est fonction d'une valeur numérique à plusieurs bits contenue dans un second registre;
des moyens pour incrémenter la valeur contenue dans le second registre aux mêmes intervalles périodiques réguliers que pour le premier registre, pour faire varier la configuration de bits dans le second train de clé d'une manière identique à la configuration de bits dans le premier train de clé;
des moyens pour combiner les bits du second train de clé pseudo-aléatoire avec le train de données codées de façon cryptographique qui est reçu au second emplacement, pour décoder ces données de façon à fournir l'information de télécommunication, et avec un train de bits de données acheminant l'information de télécommunication qui doit être émise du second emplacement vers le premier emplacement, pour coder de façon cryptographique ce train de données;
des moyens pour émettre vers un récepteur au premier emplacement le train de données qui est codé au second emplacement; et
des moyens pour comparer périodiquement la valeur contenue dans le second registre avec la valeur reçue du premier registre, pour déterminer si les deux valeurs correspondent pour des instants correspondants et si les premier et second trains de clé sont en synchronisme mutuel.

31. Un système pour la communication en duplex avec des données codées de façon cryptographique dans un système de télécommunication numérique selon la revendication 30, comprenant également :
des moyens pour restaurer la valeur contenue dans le second registre avec la valeur reçue du premier registre pour un instant correspondant, lorsque les valeurs sont devenues différentes, pour resynchroniser mutuellement les premier et second trains de clé.

32. Un système pour la communication en duplex avec des données codées de façon cryptographique dans un système de télécommunication numérique selon la revendication 30, dans lequel :
l'étape d'émission vers le récepteur, à des intervalles périodiques réguliers, de la valeur contenue dans le premier registre, d'une manière dispersée parmi les émissions de données codées, comprend le multiplexage des émissions de données codées et des émissions des valeurs du premier registre.

33. Un système pour la communication en duplex avec des données codées de façon cryptographique dans un système de télécommunication numérique selon la revendication 32, dans lequel :
les valeurs du premier registre sont émises sur un canal auxiliaire à faible débit binaire d'un train de télécommunication cellulaire numérique.

34. Un système pour la communication en duplex avec des données codées de façon cryptographique dans un système de télécommunication numérique selon la revendication 33, dans lequel :
le canal auxiliaire à faible débit binaire est un canal de commande associé lent.

35. Un système pour la communication en duplex avec des données codées de façon cryptographique dans un système de télécommunication numérique selon la revendication 33, dans lequel :
les valeurs du premier registre sont combinées avec d'autres données à faible débit sur le canal auxiliaire à faible débit binaire.

36. Un système pour la communication en duplex avec des données codées de façon cryptographique dans un système de télécommunication numérique selon la revendication 35, dans lequel :
l'émission des valeurs du premier registre est temporairement interrompue lorsqu'il est nécessaire d'émettre d'autres données sur le canal auxiliaire à faible débit binaire.

37. Un système pour la communication en duplex avec des données codées de façon cryptographique dans un système de télécommunication numérique selon la revendication 30, dans lequel :
l'étape de comparaison périodique de la valeur contenue dans le second registre avec la valeur reçue du premier registre, pour déterminer si les deux valeurs correspondent pour des instants correspondants, et si les premier et second trains de clé sont en synchronisme mutuel, comprend l'addition d'une valeur incrémentielle à la valeur reçue du premier registre, pour tenir compte d'un retard de transmission.

38. Un système pour la communication en duplex avec des données codées de façon cryptographique dans un système de télécommunication numérique selon la revendication 30, dans lequel :
les bits du premier train de clé pseudo-aléatoire sont combinés avec le train de bits de données acheminant l'information de télécommunication par addition modulo 2; et
les bits du second train de clé pseudo-aléatoire sont combinés avec le train reçu de données codées de façon cryptographique, par soustraction modulo 2.

39. Un procédé pour transmettre une information de synchronisation dans la transmission cryptée de signaux entre une station de base et une station mobile dans un système de radiocommunication mobile qui fonctionne conformément au principe AMRT, avec transmission dans des trames et des créneaux temporels, dans lequel une information de commande est transmise sur un canal de commande associé crypté (FACCH) et sur un canal de commande associé non crypté (SACCH), et dans lequel la station de base et la station mobile comprennent chacune un compteur de trames qui compte des trames émises et reçues (R1-R11, ...) et qui commande la formulation d'une séquence de cryptage qui est superposée dans la station de base sur les signaux non cryptés émis vers la station mobile, par l'émission sur le canal de commande associé non crypté (SACCH) à partir de la station de base, pendant un nombre donné de trames (R1-R11), d'un mot d'information (W3) qui désigne le numéro de séquence (35, 46, ...) pour la trame sur laquelle le compteur de trames du mobile doit être réglé à l'instant (t₁) auquel le mot d'information (W3) a été reçu, et qui est lié au numéro de séquence pour le compteur de trames de la station de base à l'instant (tₒ) auquel le mot d'information (W3) a été émis.

40. Un procédé selon la revendication 39, dans lequel le mot d'information (W3) concernant le numéro de séquence du compteur de trames de la station mobile, sous la forme d'un ensemble de salves (S1-S11), est émis pendant un nombre correspondant de trames (R1-R11), et dans lequel le numéro de séquence est identique au numéro de séquence du compteur de trames de la station de base à l'instant d'émission (tₒ), augmenté du nombre de salves qui sont nécessaires pour l'émission du mot d'information.

41. Un procédé selon la revendication 39, dans lequel le mot d'information (W3) est suivi par un mot d'information supplémentaire (W4, W5, ...) qui est émis vers la station mobile pour contrôler continuellement la valeur à laquelle se trouve le compteur de trames dans la station mobile.
